# EUROPÄISCHE PATENTSCHRIFT

(11) **EP 3 731 198 B1**
(45) Veröffentlichungstag und Bekanntmachung des Hinweises auf die Patenterteilung: **20.03.2024**
(21) Anmeldenummer: 19170746.2
(22) Anmeldetag: 24.04.2019
(51) Int. Cl.: G08B 17/00, A62C 3/00, A62C 27/00, G05D 1/00

(54) **BRANDSCHUTZROBOTER ZUR STEUERUNG VON BRANDBEKÄMPFUNGSVORRICHTUNGEN, ENTSPRECHENDES BRANDSCHUTZSYSTEM UND VERFAHREN ZUM BETRIEB DESSELBEN**
FIRE PROTECTION ROBOT FOR CONTROL OF FIRE PROTECTION DEVICES, CORRESPONDING FIRE PROTECTION SYSTEM AND METHOD FOR OPERATING THE SAME
ROBOT DE PROTECTION CONTRE L'INCENDIE DESTINÉ À LA COMMANDE DES DISPOSITIFS DE LUTTE CONTRE L'INCENDIE, SYSTÈME DE PROTECTION CONTRE L'INCENDIE CORRESPONDANT ET SON PROCÉDÉ DE FONCTIONNEMENT

(43) Veröffentlichungstag der Anmeldung: 28.10.2020
(73) Patentinhaber: Minimax Viking Research & Development GmbH, 23840 Bad Oldesloe (DE)
(72) Erfinder: Westphal, Thorsten, 23840 Bad Oldesloe (DE); Enejehlm, Marika af, 23840 Bad Oldesloe (DE); Böke, Joachim, 23840 Bad Oldesloe (DE)
(74) Vertreter: Eisenführ Speiser

(56) Entgegenhaltungen:
- EP-A1- 2 511 888
- CN-A- 107 899 166
- US-B1- 6 364 026
- US-B1- 10 137 984

## Beschreibung

Die vorliegende Erfindung betrifft einen Brandschutzroboter, ein Brandschutzsystem umfassend einen derartigen Brandschutzroboter und ein Verfahren zum Betrieb des Brandschutzsystems.

Insbesondere betrifft die Erfindung einen Brandschutzroboter, der dem (vorbeugenden) Brandschutz innerhalb von Brandschutzbereichen dienen kann, deren Überwachung mittels mit einer Zentralvorrichtung verbundener Brandmelder nicht möglich ist. Solche Brandschutzbereiche sind insbesondere im Freien befindliche Areale, wie beispielsweise Fabrikgelände in der Industrie oder weitläufige Gelände in der Land- und/oder Forstwirtschaft, in denen ein relativ großer Bereich in relativ kurzen Zeitintervallen überwacht werden muss.

Eine Problematik solcher Brandschutzbereiche ist hierbei darin zu sehen, dass Areale im Freien die Verwendung von üblichen Brandmeldern aufwendig, wenn nicht gar unmöglich machen. Einerseits können diese Brandmelder nur mit großem Aufwand überhaupt montiert werden, um den gesamten Brandschutzbereich abzudecken. Andererseits bewirken Umwelteinflüsse wie Wind, Nebel, Regen und ähnliches, dass ortsfest positionierte Brandsensoren, wie sie in Brandmeldern zu finden sind, nur sehr unzuverlässig Brandkenngrößen aufnehmen können. Das ist insbesondere deshalb der Fall, weil diese ortsfest positionierten Brandsensoren einen begrenzten Öffnungswinkel und damit einen begrenzten Detektionsbereich haben. Hierdurch kann es zu "Blind Spots" für die Brandsensoren kommen und/oder dazu, dass ein Brandereignis, um detektiert werden zu können (beispielsweise über die Rauchentwicklung), bereits sehr weit fortgeschritten sein muss.

Ein weiteres Problem ist auch darin zu sehen, dass sich innerhalb dieser Brandschutzbereiche oftmals Objekte befinden können, die ein hohes Brandrisiko aufweisen, wie Holz, Papier, chemische Substanzen oder ähnliches. Diese Objekte können insbesondere leicht entzündlich und/oder leicht brennbar sein, so dass sich ein Brandereignis mit hoher Geschwindigkeit ausbreiten kann. Diese Ausbreitung kann auch durch Umwelteinflüsse wie starken Wind oder hohe Temperaturen noch zusätzlich unterstützt werden. Da sich in solchen Fällen schon ein kleines Brandereignis schnell zu einem ausgebreiteten Brand entwickeln kann, ist in derartigen Brandschutzbereichen ein schnelles Reagieren im Falle eines Brandereignisses dringend angezeigt.

Gemäß dem Stand der Technik werden daher Brandschutzroboter, die mit einer Kamera ausgestattet sind, eingesetzt, um derartige Brandschutzbereiche zu überwachen. Hierzu werden die Brandschutzroboter, beispielsweise per Fernsteuerung oder automatisch, über den Brandschutzbereich bewegt und nehmen hierbei Bilder des Brandschutzbereichs auf. Diese Bilder werden sodann, in regelmäßigen Abständen oder in Echtzeit, an eine Anzeigeeinheit übermittelt. Die Nutzer, beispielsweise entsprechendes Brandschutzpersonal, welche auch die Fernsteuerung der Brandschutzroboter übernommen haben, können die übermittelten Bilder auf der Anzeigeeinheit betrachten und so Brandereignisse identifizieren. Falls ein Brandereignis identifiziert wird, kann der Nutzer sodann entsprechende Brandschutzaktionen einleiten.

Unter einer Brandschutzaktion ist hierbei jede Aktion zu verstehen, die dem (vorbeugenden) Brandschutz dienen kann. Der Nutzer kann so beispielsweise einen Alarm auslösen, um sich gegebenenfalls innerhalb des Brandschutzbereichs befindliche Personen zu warnen und/oder zu evakuieren. Alternativ oder zusätzlich kann der Nutzer auch Brandbekämpfungsmaßnahmen einleiten, wie beispielsweise das Rufen der Feuerwehr oder das Einleiten einer Brandbekämpfungsaktion mittels auf dem Areal befindlicher Brandbekämpfungsvorrichtungen wie Löschturbinen und/oder Löschmonitoren.

So zeigt beispielsweise die US 10,137,984 B1 eine Drohne, die in der Lage ist, Zwischenfälle in einem Areal mit mehreren Zonen zu detektieren. Nach vorheriger Erlaubnis oder Bestätigung durch einen Nutzer kann die Drohne eingerichtet sein, eine Trigger-Aktivität in einer der Zonen zu detektieren oder eine Indikation derselben zu empfangen, einen Navigationspfad zu der Zone zu ermitteln oder zu empfangen, basierend auf dem Navigationspfad in die Zone zu navigieren, dort Sensordaten mit ihren entsprechenden Sensoren zu empfangen und diese Sensordaten an ein Nutzerendgerät zu übermitteln, um diese von einem Nutzer sichten zu lassen. Die Drohne kann hierbei unter anderem zur Detektion von Brandereignissen eingesetzt werden.

Ein Nachteil des Standes der Technik ist darin zu sehen, dass er eine Vielzahl von Nutzeraktionen erfordert, also viele Schritte umfasst, die von einem Tätigwerden des Nutzers oder der Nutzer abhängen. Dadurch, dass der Nutzer zunächst die Informationen verarbeiten und sodann eine entsprechende Entscheidung bezüglich der einzuleitenden Brandschutzaktion oder Brandschutzaktionen treffen muss, ist die Vorgehensweise gemäß des Standes der Technik inhärent fehleranfällig und langwierig.

Vor diesem Hintergrund ist es eine Aufgabe der Erfindung, eine Vorrichtung, ein System und ein entsprechendes Verfahren bereitzustellen, die es erlauben, eine sichere und effizientere Überwachung von und/oder Brandbekämpfung in Brandschutzbereichen der oben genannten Art durchzuführen. Insbesondere ist es eine Aufgabe der Erfindung, die Zeit bis zur Einleitung der Brandschutzaktion gegenüber dem Stand der Technik zu reduzieren.

Diese Aufgabe wird erfindungsgemäß gelöst durch ein Brandschutzsystem nach Anspruch 1.

Unter einem Brandschutzroboter ist hierbei ein unbemanntes Fahrzeug zu verstehen, das zum Zwecke des (vorbeugenden) Brandschutzes, insbesondere in Brandschutzbereichen, die große Areale im Freien umfassen, eingesetzt werden kann. In einigen Ausführungsformen kann der Brandschutzroboter zu diesem Zwecke insbesondere als Brandschutzdrohne ausgeführt sein, welche sich innerhalb des Brandschutzbereichs bewegen und den Brandschutzbereich so auf eventuelle Brandereignisse testen kann.

Hierzu weist der Brandschutzroboter zumindest eine Steuereinheit auf, die den Brandschutzroboter entlang eines vordefinierten Navigationspfades bewegt. Dieser Navigationspfad kann insbesondere rasterartig aufgebaut sein. Der Navigationspfad wird bevorzugt derart gewählt, dass er den durch den Brandschutzroboter zu überwachenden Brandschutzbereich vollständig abdeckt. Bei dem durch den Brandschutzroboter zu überwachenden Brandschutzbereich kann es sich hierbei um den gesamten Brandschutzbereich handeln, wenn nur ein einziger Brandschutzroboter verwendet wird. Kommen mehrere Brandschutzroboter zum Einsatz, kann der durch einen jeweiligen Brandschutzroboter zu überwachende Brandschutzbereich auch nur einen Teil des gesamten Brandschutzbereichs umfassen, wobei die Gesamtheit aller durch die jeweiligen Brandschutzroboter zu überwachenden Brandschutzbereiche den gesamten Brandschutzbereich bildet. Hierdurch kann sichergestellt werden, dass der oder die Brandschutzroboter innerhalb des gesamten Brandschutzbereiches Brandkenngrößen erfassen können.

Das Bewegen, mittels der Steuereinheit, des Brandschutzroboters entlang des Navigationspfades erfolgt bevorzugt automatisch und autonom. Das bedeutet, dass die Steuereinheit eingerichtet ist, den Brandschutzroboter ohne manuelle Steuerung entlang des Navigationspfades zu bewegen. Dazu muss die Steuereinheit in der Lage sein, den für den Brandschutzroboter vorbestimmten Navigationspfad zu ermitteln. In einigen Ausführungsformen kann der vorbestimmte Navigationspfad entlang des Brandschutzbereiches aus einem mit der Steuereinheit kommunikativ gekoppelten Speicher ausgelesen werden. Alternativ oder zusätzlich kann die Steuereinheit auch eingerichtet sein, ein Instruktionssignal, beispielsweise von einer Zentralvorrichtung oder direkt von einem Nutzer, zu empfangen und den Navigationspfad auf dem Wege der Signalverarbeitung aus diesem Instruktionssignal zu extrahieren.

In einigen Ausführungsformen kann der Brandschutzroboter ferner eingerichtet sein, Hindernisse entlang seines Navigationspfades zu erkennen. In diesem Fall kann das Bewegen, mittels der Steuereinheit, auch ein Anpassen des Navigationspfades umfassen, um das Hindernis zu umgehen. Hierbei kann das Anpassen einerseits so geschehen, dass ein alternativer, vordefinierter Navigationspfad aus dem Speicher ausgelesen wird. Der Brandschutzroboter wird dann so lange entlang des alternativen, vordefinierten Pfades bewegt, bis entweder ein neues Hindernis ermittelt wird - in diesem Fall wird der Navigationspfad erneut angepasst, beispielsweise entsprechend des vorher gewählten Navigationspfades oder eines weiteren, alternativen Navigationspfades - oder bis das Bewegen des Brandschutzroboters entlang des Navigationspfades beendet wird. In einigen Ausführungsformen kann das Anpassen des Navigationspfades auch dahingehend umgesetzt werden, dass der Brandschutzroboter selbsttätig einen alternativen Navigationspfad um das Hindernis errechnet und sich danach weiter entlang des zuvor vorgegebenen Navigationsfades bewegt, bis entweder ein weiteres Hindernis detektiert wird - in diesem Fall wird der Navigationspfad erneut angepasst - oder das Bewegen entlang des Navigationspfades beendet wird.

In nicht beanspruchten Ausführungsformen kann zusätzlich zur automatischen Steuerung durch die Steuereinheit eine manuelle Steuerung bereitgestellt werden. Bevorzugt muss diese manuelle Steuerung aktiv durch einen Nutzer aktiviert werden. Noch weiter bevorzugt umfasst das Aktivieren der manuellen Steuerung eine Eingabe eines Sicherheitscodes. So kann verhindert werden, dass ungeschulte oder nicht autorisierte Nutzer die Steuerung des Brandschutzroboters übernehmen.

Der Brandschutzroboter umfasst ferner eine Brandsensoreinheit, die ausgebildet ist, zumindest eine Brandkenngröße entlang des vorgegebenen Navigationspfades zu erfassen. Unter einer Brandsensoreinheit kann insbesondere eine Anordnung, die einen oder mehrere Sensoren zur Ermittlung von einer oder mehreren Brandkenngrößen, wie beispielsweise Temperatur, Temperaturgradient, Rauchaerosole, elektromagnetische Strahlung, Brandgase, und ähnlichem umfasst, verstanden werden.

Die Brandsensoreinheit ist hierbei bevorzugt so eingerichtet, dass sie während des Bewegens des Brandschutzroboters entlang des vorgegebenen Navigationspfades kontinuierlich die zumindest eine Brandkenngröße erfasst, um so ein mögliches Brandereignis zu identifizieren. Alternativ oder zusätzlich kann die zumindest eine Brandkenngrößen auch in vorgegebenen Intervallen und/oder in Reaktion auf eine Nutzereingabe erfasst werden.

Um im Falle eines Erfassens der zumindest einen Brandkenngröße unmittelbar reagieren zu können, umfasst der Brandschutzroboter ferner eine Kommunikationseinheit. Die Kommunikationseinheit ist konfiguriert, in kommunikativer Signalverbindung mit den weiteren Komponenten des Brandschutzsystems, und insbesondere mit zumindest einer Brandbekämpfungsvorrichtung, zu stehen. Hierbei kann die Kommunikation zwischen der Kommunikationseinheit des Brandschutzroboters und der Brandbekämpfungsvorrichtung direkt oder über eine Zentralvorrichtung geschehen.

Bei der Brandbekämpfungsvorrichtung kann es sich insbesondere um eine Löschturbine oder einen Löschmonitor zur Ausgabe eines Löschfluids handeln. Löschturbinen dieser Art sind bekannt, beispielsweise aus der WO 2015/198163. Es handelt sich hierbei um üblicherweise ortsfeste Vorrichtungen, die der Ausgabe eines Löschfluids auf einen Zielort eines Brandereignisses, dienen, wobei die Vorrichtungen eine gewisse Reichweite aufweisen.

Die Brandbekämpfungsvorrichtung kann an einem Ort fest installiert sein oder kann mobil ausgeführt werden. Ein entsprechendes System umfasst zumeist mehrere Brandschutzroboter und mehrere (mobile und/oder fest installierte) Brandbekämpfungsvorrichtungen. Die Brandbekämpfungsvorrichtungen umfassen zumindest eine Löschfluidversorgung und zumindest einen Löschfluidauslass, wobei die zumindest eine Löschfluidversorgung und der zumindest eine Löschfluidauslass fluidleitend verbunden sind. In einigen Ausführungsformen kann die Löschfluidversorgung insbesondere einen Löschfluidvorrat, beispielsweise in Form eines Fluidtanks, umfassen. Diese Ausführung ist im Falle von mobilen Brandbekämpfungsvorrichtungen von Vorteil, da so die Mobilität auch auf große Entfernungen gewährleistet werden kann, da keine Löschfluidleitung mit begrenzter Länge, wie ein Schlauch oder dergleichen, zur Versorgung der Brandbekämpfungsvorrichtung aus einem fest installierten Löschfluidvorrat benötig wird. Alternativ oder zusätzlich kann die Löschfluidversorgung auch als Löschfluidleitung, welche die Brandbekämpfungsvorrichtung mit einem Löschfluidversorgungsnetzwerk verbindet, ausgestaltet werden. Diese Ausführung ist bei festinstallierten Brandbekämpfungsvorrichtungen von Vorteil. Durch das Versorgen aus dem Löschfluidversorgungsnetzwerk kann sichergestellt werden, dass größere Mengen von Löschfluid bereitgestellt werden können als beispielsweise bei mobilen Tanks.

Die Kommunikationseinheit ist hierbei insbesondere konfiguriert, bei Erfassen der zumindest einen Brandkenngröße, welche ein Vorhandensein oder die Möglichkeit eines Brandes anzeigt, ein entsprechendes Aktivierungssignal zu erzeugen und dieses Aktivierungssignal an die zumindest eine Brandbekämpfungsvorrichtung zu übermitteln. In Antwort auf dieses Aktivierungssignal wird die Brandbekämpfungsvorrichtung sodann aktiviert. Ein Aktivieren der Brandbekämpfungsvorrichtung umfasst eine Ausrichtung der Brandbekämpfungsvorrichtung dergestalt, dass der Löschfluidauslass der Brandbekämpfungsvorrichtung das Löschfluid in Richtung des Brandereignisses ausgeben kann. Zusätzlich kann ein Aktivieren der Brandbekämpfungsvorrichtung im Falle einer mobilen Brandbekämpfungsvorrichtung auch ein Aktivieren einer Antriebseinheit umfasst, mittels der die Brandbekämpfungsvorrichtung in Richtung der Position des Brandereignisses, also in Richtung eines Zielortes, an dem das Brandereignis aufgetreten ist, bewegt wird.

Unter einem solchen Zielort wird hierbei der Ort bezeichnet, an dem sich das Brandereignis, also das von der Brandbekämpfungsvorrichtung zu erreichende Ziel, tatsächlich befindet. Hierbei bedeutet ein Bewegen einer mobilen Brandbekämpfungsvorrichtung zum Zielort, dass die Brandbekämpfungsvorrichtung von ihrer Ausgangsposition entlang eines Bewegungspfades in eine Löschposition um einen bestimmten Abstand beabstandet vom Zielort navigiert wird. Die Brandbekämpfungsvorrichtung wird also nicht inmitten des Ortes Brandereignisses angeordnet, sondern in einigem Abstand hierzu. Dieser Abstand wird hierbei derart gewählt, dass die Funktionalität der Brandbekämpfungsvorrichtung nicht durch das Brandereignis beeinflusst wird, der Brand aber zuverlässig gelöscht werden kann. Dieser Abstand kann also insbesondere von der Reichweite des Löschfluidauslasses der Brandbekämpfungsvorrichtung abhängen, von den Eigenschaften (Hitze, Ausbreitung, etc.) des Brandereignisses sowie von den lokalen Gegebenheiten (Windrichtung, Witterung im Allgemeinen, etc.).

Nach Erreichen des der Löschposition in einigem Abstand zum Zielort wird die mobile Brandbekämpfungsvorrichtung sodann ebenfalls entsprechend ausgerichtet, um das Löschfluid auf den am Zielort befindlichen Brand ausgeben zu können.

In den beanspruchten Ausführungsformen umfasst das Aktiviereni ein Einleiten einer Brandschutzaktion. Eine solche Brandschutzaktion umfasst eine Löschaktion zur Bekämpfung des Brandes. Zusätzlich kann die durch die Brandbekämpfungsvorrichtung durchgeführte Brandschutzaktion auch ein Ausgeben eines Alarms oder ein Aktivieren weiterer Brandbekämpfungsvorrichtungen umfassen.

Auch wenn in den obigen Ausführungsformen die Brandschutzroboter sowohl zur Überwachung des Brandschutzbereichs als auch zur Steuerung der Brandbekämpfungsvorrichtungen verwendet werden, kann der Brandschutzroboter in nicht beanspruchten Ausführungsformen auch nur zur Überwachung oder nur zur Steuerung eingesetzt werden. In einer spezifischen nicht beanspruchten

Ausführungsform werden die Brandschutzroboter nur zur Steuerung der Brandbekämpfungsvorrichtungen eingesetzt und die Überwachung des Brandschutzbereichs erfolgt mittels entsprechend stationär angeordneter Masten mit Überwachungstechnik. In diesem Fall sind die Masten als die Brandsensoreinheit des Brandschutzroboters zu verstehen. Der Brandschutzroboter kommuniziert mit den Masten und stellt so fest, an welcher Position entlang des Navigationspfades der jeweilige Mast eine Brandkenngröße aufgenommen hat und kann so die Brandkenngrößen entlang seines Navigationspfades erfassen.

Mittels eines Brandschutzroboters der vorstehend genannten Art ist es also möglich, die Überwachung des Brandschutzbereichs automatisch durchzuführen und autonom eine Brandschutzaktion durch die Brandbekämpfungsvorrichtung in die Wege zu leiten. Dies reduziert die Anzahl an Nutzerinteraktionen und die Zeit zwischen Detektion des Brandes und Einleitung der Brandschutzaktion, insbesondere der Löschaktion.

Gemäß einer bevorzugten Ausführungsform ermittelt die Steuereinheit den vorgegebenen Navigationspfad auf Basis von Navigationsdaten, welche ein Navigationsraster mit einer Vielzahl von Rasterkoordinaten umfassen, wobei das Navigationsraster einen Brandschutzbereich definiert.

In einigen Ausführungsformen ist die Steuereinheit eingerichtet, den vorgegebenen Navigationspfad für den Brandschutzroboter auf Basis von Navigationsdaten zu ermitteln. Unter Navigationsdaten ist in diesem Fall ein Datensatz zu verstehen, der eine Vielzahl von Rasterkoordinaten umfasst. Diese Rasterkoordinaten bilden ein Navigationsraster über den Brandschutzbereich. In dieser Ausführungsform wird der Navigationspfad also anhand eines Rasters bestimmt, welches über den gesamten zu überwachenden Bereich gelegt wird. Auf diese Weise kann sichergestellt werden, dass jede Position innerhalb des verwendeten Rasters einer Position innerhalb des Brandschutzbereichs zugeordnet werden kann.

Mittels dieser Aufteilung des Brandschutzbereichs in ein entsprechendes Raster wird es ermöglicht, eine präzise Ermittlung der Positionen innerhalb des Brandschutzbereichs zu erreichen, selbst wenn der Brandschutzbereich sehr groß ist und/oder im Laufe der Zeit vergrößert wird.

Gemäß einer weiteren bevorzugten Ausführungsform ist die Steuereinheit konfiguriert, den vorgegebenen Navigationspfad in Antwort auf das Erfassen der zumindest einen Brandkenngröße anzupassen.

In einigen Ausführungsformen ist der Brandschutzroboter eingerichtet, von seinem vorbestimmten Navigationspfad abzuweichen, wenn die Brandsensoreinheit an einer bestimmten Position eine Brandkenngröße erfasst und diese Brandkenngröße auf ein Brandereignis hinweist.

Anstatt den Brandschutzroboter in so einem Fall von der Position des (potentiellen) Brandereignisses weg zu bewegen, wie durch den Navigationspfad vorgegeben, kann die Steuereinheit auf das Erfassen der zumindest einen Brandkenngröße mit einem Anhalten des Brandschutzroboters und einem Verweilen an der Position, an der die zumindest eine Brandkenngröße ermittelt wurde, reagieren. Die Steuereinheit kann ferner eingerichtet sein, die Brandschutzvorrichtung zu veranlassen, in der unmittelbaren Umgebung um die Position, an der die Brandkenngröße erfasst wurde, weitere Brandkenngrößen mittels der Brandsensoreinheit zu erfassen, um so präzisere Informationen über das Brandereignis zu erhalten. Alternativ oder zusätzlich kann die Steuereinheit den Brandschutzroboter veranlassen, Bilder der Position, an der die Brandkenngrö0e erfasst wurde und/oder deren unmittelbarer Umgebung - und somit des (potentiellen) Brandereignisses - aufzunehmen, sofern der Brandschutzroboter über eine Kamera verfügt. Alternativ oder zusätzlich kann die Steuereinheit in Antwort auf eine Identifizierung eines tatsächlich vorliegenden Brandereignisses den Brandschutzroboter auch veranlassen, einen Erstlöschangriff durchzuführen, sofern der Brandschutzroboter eine Brandbekämpfungseinheit umfasst.

Der Brandschutzroboter kann ferner eingerichtet sein, in Antwort auf das Ermitteln der Brandkenngröße den Zielort des (potentiellen) Brandereignisses zu bestimmen und, auf Basis des Zielortes, eine Sicherheitsposition zu ermitteln, zu der der Brandschutzroboter navigieren kann. Unter der Sicherheitsposition wird insbesondere eine Position verstanden, in der der Brandschutzroboter zwar außerhalb des Gefahrenbereichs des Brandereignisses angeordnet ist, jedoch weiterhin Brandkenngrößen am Zielort aufnehmen und/oder eine Erstlöschaktion durchführen kann. In einigen Ausführungsformen kann die Sicherheitsposition alternativ oder zusätzlich einer Position des Brandschutzroboters entsprechen, in der sichergestellt ist, dass der Brandschutzroboter nicht in einem Auslassbereich des Löschfluidauslass einer Brandbekämpfungsvorrichtung angeordnet ist. Dadurch kann einerseits sichergestellt werden, dass der Brandschutzroboter nicht durch das ausdringende Löschfluid beschädigt oder sogar zerstört wird, andererseits bewerkstelligt werden, dass das Löschfluid vollständig auf das Brandereignis ausgelassen wird.

Die Anpassung des Navigationspfades ist hierbei bevorzugt an gewisse Randbedingungen geknüpft. In einigen Ausführungsformen bedeutet dies, dass die Anpassung des Navigationspfades nicht dahingehen geschehen soll, dass der Brandschutzroboter mit einem weiteren Brandschutzroboter und/oder einer ortsfesten und/oder mobilen Brandbekämpfungsvorrichtung kollidiert. Alternativ oder zusätzlich können die Randbedingungen auch so ausgestaltet werden, dass die Anpassung des Navigationspfades nur so erfolgt, dass der Brandschutzroboter stets in dem von ihm zu überwachenden Brandschutzbereich verbleibt. Die Anpassung des Navigationspfades soll also nur so erfolgen, dass der Brandschutzroboter nicht aus dem vorbestimmten Brandschutzbereich hinausgeführt wird.

In der erfindungsgemässen Ausführungsform umfasst der Brandschutzroboter ferner eine Prozessoreinheit, die konfiguriert ist, auf Basis der zumindest einen Brandkenngröße und der Navigationsdaten einen Zielort eines Brandereignisses zu ermitteln. Erfindungsmeäss ist die Kommunikationseinheit konfiguriert, eine Zielortindikation für den Zielort des Brandereignisses an die Brandbekämpfungsvorrichtung und/oder nicht erfindungsmemäss zumindest einen weiteren Brandschutzroboter zu übermitteln.

Erfindungsgemäss umfasst der Brandschutzroboter ferner eine Prozessoreinheit. Eine Prozessoreinheit kann hierbei insbesondere einen Mikroprozessor, einen Mikrocontroller oder eine andere (digitale) Recheneinheit, umfassen, welche dahingehend programmiert werden kann, auf Basis der Brandkenngröße sowie der Rasterkoordinaten einen Zielort zu bestimmen. Unter einem Zielort wird hierbei die Position innerhalb des Brandschutzbereichs verstanden, an der das (potentielle) Brandereignis aufgetreten ist. Dieser Zielort kann innerhalb des Rasters, welches über den Brandschutzbereich gespannt ist, ebenfalls durch entsprechende Rasterkoordinaten angegeben werden.

Der Brandschutzroboter kann dieses Ermitteln des Zielortes sodann verwenden, um eine weitere Untersuchung des Brandereignisses am und in unmittelbarer Umgebung um den Zielort herum durchzuführen. Beispielsweise kann die Brandsensoreinheit des Brandschutzroboters verwendet werden, um erneut Brandkenngrößen am und in der unmittelbaren Umgebung um den Zielort zu sammeln.

In den erfindungsmässen Ausführungsformen kann der Brandschutzroboter ferner eine Zielortindikation, die den ermittelten Zielort angibt, erzeugen und diese Zielortindikation an die Brandbekämpfungsvorrichtung und/oder - nicht erfindungsgemäss - einen weiteren Brandschutzroboter übermitteln. Hierzu ist bevorzugt die Recheneinheit des Brandschutzroboters eingerichtet, die Zielortindikation zu erzeugen und die Kommunikationseinheit des Brandschutzroboters ist ferner eingerichtet, die Zielortindikation an zumindest eine Brandbekämpfungsvorrichtung und/oder - nicht erfindungsgemäss - an zumindest einen weiteren Brandschutzroboter zu übermitteln.

Hierbei kann die Kommunikationseinheit eingerichtet sein, die Zielortindikation auf direktem Wege an die Brandbekämpfungsvorrichtung zu übermitteln. Um in diesem Fall eine effiziente Arbeitsweise des Systems zu gewährleisten, ist es bevorzugt, dass dem Brandschutzroboter Informationen über die Standorte der einzelnen innerhalb des durch den Brandschutzroboter zu überwachenden Brandschutzbereichs liegenden Brandbekämpfungsvorrichtungen bekannt sind. Hierzu kann der Brandschutzroboter bevorzugt eine Speichereinheit umfassen, in der entsprechende Standortindikationen über die Standorte der ortsfesten Brandbekämpfungsvorrichtungen abgespeichert sind. Zusätzlich kann die Kommunikationseinheit eingerichtet sein, Standortindikationssignale von den ortsfesten und/oder den mobilen Brandbekämpfungsvorrichtungen zu empfangen und diesen Standortindikationssignalen die einzelnen Standortindikationen der jeweiligen Brandbekämpfungsvorrichtungen zu entnehmen.

Ferner ist es bevorzugt, dass der Brandschutzroboter die Brandschutzroboterstandorte der weiteren Brandschutzroboter innerhalb des Brandschutzbereichs kennt. Zur Ermittlung der Brandschutzroboterstandorte ist die Kommunikationseinrichtung des Brandschutzroboters insbesondere eingerichtet, entsprechende Indikationssignale von den einzelnen Brandschutzrobotern zu empfangen und diesen eine entsprechende Indikation über den Brandschutzroboterstandort des jeweiligen Brandschutzroboters zu entnehmen. Auf diese Weise kann der Brandschutzroboter ermitteln, welche weiteren Brandschutzroboter und/oder Brandbekämpfungsvorrichtungen sich in der Nähe des Zielorts befinden und damit den Zielort - beziehungsweise die entsprechende Sicherheits- und/oder Löschposition - entweder schnell erreichen oder - im Falle, dass sie sich bereits in der Nähe des Zielorts befinden - unmittelbar eine Brandschutzaktion einleiten können. Dies erlaubt eine schnelle und effiziente Einleitung der Brandschutzaktion.

Die Kommunikationseinheit ist eingerichtet, die Zielortindikation sodann an zumindest eine ortsfeste und/oder mobile Brandbekämpfungsvorrichtung zu übermitteln. Eine ortsfeste Brandbekämpfungseinrichtung kann die Zielortindikation bevorzugt verwenden, um sich in Richtung des Brandereignisses auszurichten und die Brandschutzaktion am Zielort auszuführen. In einer spezifischen Ausführungsform, in der die Brandschutzaktion eine Löschaktion umfasst, ist die Brandbekämpfungsvorrichtung insbesondere eingerichtet, die Zielortindikation zu nutzen, um ihren Löschfluidauslass in Richtung des Zielortes auszurichten.

Im Falle einer mobilen Brandbekämpfungsvorrichtung kann die Brandbekämpfungsvorrichtung die Zielortindikation verwenden, um sich selbsttätig entlang des Bewegungspfades zu dem entsprechenden Zielort zu navigieren. Hierzu umfasst die mobile Brandbekämpfungsvorrichtung bevorzugt Navigationsinformationen über den Brandschutzbereich. In einigen Ausführungsformen können diese Navigationsinformationen ebenfalls entsprechende Rasterkoordinaten umfassen. In einigen Ausführungsformen umfassen die Navigationsinformationen auch Kartendaten, die eine Information über das zu befahrende Gelände umfassen. Wenn die mobile Brandbekämpfungsvorrichtung am Zielort angelangt ist, kann sie die Zielortindikation nutzen, um sich in eine passende Position im Verhältnis zum Zielort auszurichten. In der spezifischen Ausführungsform, in der die Brandschutzaktion eine Löschaktion umfasst, kann dies insbesondere ein Positionieren in der Löschposition beabstandet vom Zielort und ein Ausrichten des Löschfluidauslasses in Richtung des Zielorts umfassen.

Zusätzlich kann der Brandschutzroboter die Zielortindikation auch an zumindest einen weiteren Brandschutzroboter übermitteln. Der zumindest eine weitere Brandschutzroboter kann die Zielortindikation sodann verwenden, um sich, bevorzugt selbsttätig, zum Zielort zu bewegen und dort seinerseits eine Brandschutzaktion durchführen. In einigen Ausführungen kann die Brandschutzaktion eine Überprüfung der Messung durch den ersten Brandschutzroboter umfassen. In einigen Ausführungsformen kann der zumindest eine weitere Brandschutzroboter - im Gegensatz zum am Zielort befindlichen Brandschutzroboter - mit einer Brandbekämpfungseinheit ausgestattet sein und eine Erstlöschaktion als Brandschutzaktion in die Wege leiten. Weitere Arten von Brandschutzaktionen sind denkbar.

In einigen Ausführungsformen kann der Brandschutzroboter eingerichtet sein, über eine direkte Signalverbindung mit der zumindest einen Brandbekämpfungsvorrichtung und/oder dem zumindest einen weiteren Brandschutzroboter zu kommunizieren. Alternativ oder zusätzlich kann der Brandschutzroboter eingerichtet sein, eine Kommunikationsverbindung mit einer Zentralvorrichtung aufzubauen und über die Zentralvorrichtung mit der zumindest einen Brandbekämpfungsvorrichtung und/oder dem zumindest einen weiteren Brandschutzroboter kommunizieren. Der Vorteil einer Ausführung, in der der Brandschutzroboter über die Zentralvorrichtung kommuniziert, liegt darin, dass dem Brandschutzroboter weniger Informationen über die weiteren Brandschutzroboter und/oder die Brandbekämpfungsvorrichtungen zur Verfügung stehen müssen. So muss der Brandschutzroboter in so einem Fall beispielweise nicht zunächst die Standorte der zumindest einen Brandbekämpfungsvorrichtung und/oder der weiteren Brandschutzroboter ermitteln, da die Ermittlung, welche Brandbekämpfungsvorrichtungen aktiviert und/oder Brandschutzroboter angesprochen werden müssen, durch die Zentralvorrichtung getroffen werden kann. Dies reduziert den Rechen- und Speicheraufwand seitens des Brandschutzroboters.

Ein weiterer Vorteil kann darin gesehen werden, dass eine Kommunikation über die Zentralvorrichtung ein Aktualisieren des Brandschutzsystems vereinfacht. Beispielsweise können weitere Brandschutzroboter und/oder mobile und/oder feste Brandbekämpfungsvorrichtungen mit weniger Kommunikationsaufwand hinzugefügt werden, da diese Informationen zentral in der Zentralvorrichtung abgespeichert sind und auch nur dort aktualisiert werden müssen.

In einigen Ausführungsformen umfasst der Brandschutzroboter ferner eine Umgebungssensoreinheit, die konfiguriert ist, zumindest einen Umgebungsparameter entlang des Navigationspfades zu bestimmen, wobei die Steuereinheit konfiguriert ist, den Navigationspfad in Antwort auf das Erfassen der zumindest einen Brandkenngröße auf Basis des zumindest einen Umgebungsparameters anzupassen.

In einigen Ausführungsformen umfasst der Brandschutzroboter zusätzlich zur Brandsensoreinheit eine Umgebungssensoreinheit. Die Umgebungssensoreinheit umfasst bevorzugt einen oder mehrere Sensoren, die zur Erfassung von Umgebungsparametern dienen.

Ein Umgebungsparameter im Sinne der Erfindung kann insbesondere einen Parameter umfassen oder ein Parameter sein, der zusätzliche Informationen über die lokalen Gegebenheiten innerhalb des Brandschutzbereichs übermittelt. Diese zusätzlichen Informationen können hierbei beispielsweise Windstärke, Windgeschwindigkeit, Windrichtung, Temperatur, Luftfeuchtigkeit oder ähnliches betreffen. Alternativ oder zusätzlich können diese zusätzlichen Informationen auch das Vorhandensein von Hindernissen entlang des Navigationspfades des Brandschutzroboters und/oder entlang des Bewegungspfades zumindest einer mobilen Brandbekämpfungsvorrichtungen angeben. In dem Fall, in dem die Umgebungssensoreinheit verwendet wird, um Hindernisse entlang des Navigationspfades des Brandschutzroboters zu identifizieren, kann der Brandschutzroboter diese Hindernisse sodann wie voranstehend beschrieben durch eine Anpassung des Navigationspfades umgehen. In dem Fall, in dem die Umgebungssensoreinheit verwendet wird, um Hindernisse entlang des Bewegungspfades zumindest einer mobilen Brandbekämpfungsvorrichtung zu identifizieren, kann der Brandschutzroboter insbesondere eine Hindernisindikation in das Aktivierungssignal, welches an die mobile Brandbekämpfungsvorrichtung übermittelt wird, einfügen, wobei der Bewegungspfade der mobilen Brandbekämpfungsvorrichtung entsprechend angepasst wird. Alternativ kann die Hindernisindikation aber auch in einem dedizierten Hindernissignal, welches sich von dem Aktivierungssignal unterscheidet, an die mobile Brandbekämpfungsvorrichtung übermittelt werden.

Alternativ oder zusätzlich kann die mobile Brandbekämpfungsvorrichtung selbst einen Anti-Kollisionssensor umfassen, der eingerichtet ist, Hindernisse entlang des Bewegungspfades zu identifizieren. Dies bewirkt eine höhere Sicherheit gegen Kollisionen, da es stets möglich ist, dass der von der Brandbekämpfungsvorrichtung entfernt angeordnete Brandschutzroboter ein Hindernis entlang des Bewegungspfades der Brandbekämpfungsvorrichtung nicht entdeckt.

Durch Erfassen eines oder mehrerer Umgebungsparameter entlang des Navigationspfades ist es dem Brandschutzroboter bevorzugt möglich, die Richtung und Geschwindigkeit der Ausbreitung eines Brandereignisses vorherzusagen. Dies erlaubt es dem Brandschutzroboter, seinen Navigationspfad entsprechend anpassen, um das Brandereignis verfolgen zu können und, insbesondere im Falle von Hindernissen, den Navigationspfad des Brandschutzroboters und/oder den Bewegungspfad der mobilen Brandbekämpfungsvorrichtung zu ermitteln, der den Brandschutzroboter und/oder die mobile Brandbekämpfungsvorrichtung am schnellsten in die Sicherheits- beziehungsweise Löschposition bewegt.

Für die Anpassung kann der Brandschutzroboter insbesondere die Navigationsdaten verwenden, die ihm zuvor übermittelt wurden und die darin befindlichen Rasterpunkte entsprechend anpassen. Auf diese Weise wird es dem Brandschutzroboter ermöglicht, präzise und zuverlässig zusätzliche Informationen über ein mögliches Brandereignis zu ermitteln.

In einigen Ausführungsformen ist die Kommunikationseinheit konfiguriert, die zumindest eine Brandkenngröße und/oder den zumindest einen Umgebungsparameter an die Brandbekämpfungsvorrichtung zu übermitteln.

Die Kommunikationseinheit des Brandschutzroboters kann ferner eingerichtet sein, die erfassten Brandkenngrößen und/oder die erfassten Umgebungsparameter und/oder die darauf basierende Vorhersage der Ausbreitungsrichtung und/oder Ausbreitungsgeschwindigkeit des Brandereignisses an die Brandbekämpfungsvorrichtung zu übermitteln.

In einigen Ausführungsformen ist die Kommunikationseinheit hierzu dafür eingerichtet, diese Informationen in das Aktivierungssignal einzufügen und sodann als Teil des Aktivierungssignals übermitteln. Alternativ oder zusätzlich kann für diese Informationen auch ein separates Informationsübermittlungssignal an zumindest eine Brandbekämpfungsvorrichtung übermittelt werden. In einigen Ausführungsformen kann das so modifizierte Aktivierungssignal und/oder das Informationsübermittlungssignal ferner eine brandereignisspezifische Indikation erhalten, welche Schritte durch die Brandbekämpfungsvorrichtung einzuleiten sind. Hierdurch kann eine verbesserte automatisierte Planung und/oder Durchführung der Brandschutzaktion erreicht werden.

In einer bevorzugten Ausführungsform umfasst der Brandschutzroboter zumindest eine Kamera, die konfiguriert ist, in Antwort auf das Erfassen der zumindest einen Brandkenngröße zumindest eine Aufnahme des Standorts des Brandschutzereignisses zu generieren.

In einigen Ausführungsformen kann der Brandschutzroboter zusätzlich zumindest eine Kamera umfassen. Diese Kamera kann dazu verwendet werden, Bilder von den (potentiellen) Brandereignissen aufzunehmen. Hierzu kann es sich bei der Kamera um eine gewöhnliche Digitalkamera handeln, die visuelle Aufnahmen des Brandereignisses aufnehmen kann. In einer spezifischen Ausführungsform kann es sich bei der Kamera aber auch um eine Wärmekamera handeln. Der Vorteil einer Wärmekamera ist darin zu sehen, dass die Wärmekamera die notwendigen Zusatzinformationen wie Temperatur und interne Struktur des Feuers zu ermitteln erlaubt. Hierdurch können möglichst viele Informationen über das Feuer gesammelt werden.

In diesen Ausführungsformen kann die Kamera bevorzugt eingerichtet sein, sich auf Basis der Zielortindikation auszurichten. Das bedeutet, dass die Kamera eingerichtet ist, sich in die Richtung auszurichten, in der Brandkenngrößen erfasst wurden. Dies erlaubt, stets die Position, an der gerade mögliche Brandkenngrößen erfasst werden, in einer Aufnahme festzuhalten.

In einigen Ausführungsformen wird die Kamera bevorzugt in Antwort auf das Erfassen der zumindest einen Brandkenngröße aktiviert. Das bedeutet, wenn mittels der Brandsensoreinheit zumindest eine Brandkenngröße erfasst wird, bewirkt dies ein Kameraaktivierungssignal, welches die Kamera veranlasst, Aufnahmen vom identifizierten Zielort und gegebenenfalls seiner Umgebung aufzunehmen. Dies hat den Vorteil, dass nur dann Aufnahmen gesammelt und abgespeichert werden müssen, wenn eine Notwendigkeit dafür besteht. Hierdurch kann der Speicher der Kamera und/oder der Kommunikationsaufwand zwischen der Kamera und einer Zentralvorrichtung zur Übertragung der Aufnahmen klein gehalten werden.

Alternativ kann die Kamera auch eingerichtet sein, kontinuierlich, also regelmäßig in vorgegebenen Zeitintervallen, Aufnahmen zu machen. Eine permanente Aktivierung der Kamera hat den Vorteil, dass Aufnahmen sämtlicher Teile des Brandschutzbereichs zur Verfügung stehen. Dies erlaubt beispielsweise eine Früherkennung von Ausfällen und/oder Fehlfunktionen der Brandsensoreinheit.

In nicht beanspruchten Ausführungsformen ist die Kamera auch manuell aktivierbar. In diesen Fällen kann der Nutzer die Kamera mittels einer entsprechenden Nutzeroberfläche aktivieren und/oder ausrichten und selbst entscheiden, wann Aufnahmen von der Kamera aufzunehmen sind. In einigen Ausführungen kann die Kamera auch halbautomatisch konfiguriert sein. Hierbei kann insbesondere die Aktivierung und Ausrichtung der Kamera manuell erfolgen, aber die Aufnahme automatisch, beispielsweise in bestimmten, vordefinierten Intervallen.

In einigen Ausführungsformen ist die Steuereinheit konfiguriert, ein externes Navigationssignal zu empfangen und den Navigationspfad basierend auf dem externen Navigationssignal anzupassen.

In nicht beanspruchten Ausführungsformen kann die Steuereinheit zusätzlich konfiguriert sein, den Brandschutzroboter in Antwort auf ein externes Navigationssignal zu steuern und so den automatisch ermittelten Navigationspfad anzupassen. Hierbei kann das externe Navigationssignal ein Signal sein, welches von einer Fernsteuerung eines Nutzers ausgesendet wird, welches also eine Nutzereingabe repräsentiert. In einigen Ausführungsformen ist die Fernsteuerung des Nutzers mit einer Zentralvorrichtung verbunden. In diesem Fall kommuniziert die Fernsteuerung über die Zentralvorrichtung mit dem Brandschutzroboter. In diesem Fall kann die Steuereinheit konfiguriert sein, direkt oder über die Kommunikationseinheit das externe Navigationssignal zu empfangen. In einigen Ausführungsformen kann die Fernsteuerung des Nutzers auch eine eigenständige Vorrichtung sein, die unmittelbar mit zumindest einem Brandschutzroboter kommuniziert.

Hierbei kann die Steuerung durch einen Nutzer bevorzugt kamerageführt erfolgen, wenn der Brandschutzroboter eine Kamera umfasst. Hierzu kann die Kamera insbesondere durch den Nutzer aktiviert werden oder bereits aktiv sein. Alternativ oder zusätzlich kann die Steuerung auch auf Basis des Navigationsrasters erfolgen, das dem Nutzer angezeigt wird. In dieser Ausführung wird die Position des Brandschutzroboters auf einem Raster auf einer Nutzeroberfläche angezeigt. Der Nutzer kann den Brandschutzroboter dann auf Basis dieser Anzeige navigieren. Alternativ oder zusätzlich kann die Steuerung auch halbautomatisch erfolgen, beispielsweise, indem der Nutzer einen Zielort für den Brandschutzroboter vorgibt und der Brandschutzroboter sodann auf Basis des Zielorts selbsttätig einen Navigationspfad ermittelt. Diese Ermittlung kann insbesondere auf Basis von dem Brandschutzroboter zur Verfügung stehenden Umgebungsparametern, wie Windrichtung, Windstärke, mögliche Hindernisse, etc. bestimmt werden.

In nicht beanspruchten Ausführungsformen kann der Nutzer ferner die ortsfesten und/oder die mobilen Brandbekämpfungsvorrichtungen manuell ansteuern. Unter dieser manuellen Steuerung kann hierbei insbesondere das manuelle Ausrichten des Löschfluidauslass in Richtung des Brandereignisses verstanden werden. Bevorzugt kann der Nutzer sowohl den Löschfluidauslass einer ortsfesten als auch einer mobilen Brandbekämpfungsvorrichtung manuell ausrichten. Im Falle einer mobilen Brandbekämpfungsvorrichtung kann die manuelle Steuerung ferner ein Navigieren entlang des Bewegungspfades von einem Standort in Richtung des Zielortes, insbesondere in die Löschposition, umfassen. In einigen Ausführungsformen können sowohl das manuelle Ausrichten als auch das manuelle Navigieren durch den Nutzer auf Basis von Kameraaufnahmen durch eine Kamera des Brandschutzroboters durchgeführt werden.

In nicht beanspruchten Ausführungsformen ist die Kommunikationseinheit konfiguriert, in Antwort auf das Erfassen der zumindest einen Brandkenngröße ein Alarmsignal an eine Empfangseinheit einer externen Brandschutzstelle zu übermitteln. In einigen Ausführungsformen, umfasst das Alarmsignal die Zielortindikation.

Unter einer externen Brandschutzstelle sind hierbei Endgeräte bei externen Anbietern des (vorbeugenden) Brandschutzes zu verstehen. Beispielsweise kann die Kommunikationseinheit eingerichtet sein, ein Alarmsignal an ein Empfangsgerät bei einer Feuerwehr zu übermitteln, um die Feuerwehr über das Brandereignis zu informieren. Die Feuerwehr kann sodann entsprechende Brandbekämpfungsmaßnahmen einleiten.

In nicht beanspruchten Ausführungsformen umfassen die Brandbekämpfungsmaßen insbesondere ein Ausrücken der Feuerwehr zur Bekämpfung des Brandereignisses. In einigen Ausführungsformen sind die Brandschutzroboter insbesondere konfiguriert, die hierzu ausrückenden Feuerwehrfahrzeuge zu navigieren. Dies geschieht bevorzugt über eine Übermittlung der Zielortindikation. Diese Zielortindikation kann hierbei als Teil des Alarmsignals übermittelt werden. Alternativ kann die Zielortindikation auch in einem separaten Signal übermittelt werden.

Auf Basis der Zielortindikation kann die Feuerwehr sodann den Zielort des Brandereignisses und einen entsprechenden Pfad zum Zielort bestimmen.

Obschon in den obigen nicht beanspruchten Ausführungsformen die Brandschutzroboter zur Steuerung der Brandbekämpfungsvorrichtungen und zur Navigation der Feuerwehrfahrzeuge eingerichtet sind, können die Brandschutzroboter auch eingerichtet sein, nur die Brandbekämpfungsvorrichtungen zu steuern oder nur die Feuerwehrfahrzeuge zu navigieren. In einigen Ausführungsformen können auch mehrere Brandschutzroboter eingesetzt werden, von denen ein Teil der Steuerung der Brandbekämpfungsvorrichtungen dient und ein Teil der Navigation der Feuerwehrfahrzeuge. Die Zielortindikation kann hierbei für beide Brandschutzroboter dieselbe sein.

In einigen bevorzugten Ausführungsformen umfasst der Brandschutzroboter eine Brandbekämpfungseinheit.

In einigen Ausführungsformen umfasst der Brandschutzroboter ferner eine Brandbekämpfungseinheit, die zur Erstbekämpfung des Brandes dienen kann. Bevorzugt handelt es sich bei der Brandbekämpfungseinheit um eine Löscheinheit, die eine Löschfluidversorgung umfasst oder mit einer verbunden ist sowie einen Löschfluidauslass zum Ausgeben des Löschfluids auf den Brand. Hierbei kann der Brandschutzroboter bevorzugt die Zielortindikation intern nutzen, um den Löschfluidauslass seiner Löscheinheit in Richtung des Zielortes auszurichten und so das Löschfluid auf den Zielort auszugeben.

Mittels einer solchen Brandbekämpfungseinheit kann der Brandschutzroboter eine Erstlöschung ausführen, um den Brand so bis zur Aktivierung der Brandbekämpfungsvorrichtungen einzudämmen beziehungsweise zu kontrollieren. Diese Konstellation ist besonders vorteilhaft, wenn die Brandbekämpfungsvorrichtungen mobil sind und gegebenenfalls eine gewisse Zeit benötigen, um zum Zielort zu gelangen.

In einigen Ausführungsformen ist der Brandschutzroboter als Brandschutzdrohne ausgeführt. Der erfindungsgemäße Brandschutzroboter kann als unbemanntes Land- oder Luftfahrzug ausgestaltet werden. Besonders bevorzugt ist eine Ausführung als Luftfahrzeug, insbesondere als Drohne. Der Vorteil einer Ausgestaltung als Brandschutzdrohne liegt darin, dass eine Drohne auch über unebenes Gelände gut navigierbar ist und auch im Falle von Hindernissen oder ähnlichem einen guten Überblick über den Brandschutzbereich ermöglicht. Besonders bevorzugt ist die Drohne als Löschdrohne ausgeführt, die eine Löscheinheit zur Durchführung einer Erstlöschaktion umfasst.

Die Erfindung betrifft ferner ein Brandschutzsystem umfassend zumindest einen Brandschutzroboter wie voranstehend beschrieben und zumindest eine Brandbekämpfungsvorrichtung, welche getrennt von dem Brandschutzroboter ausgeführt ist, die Brandbekämpfungsvorrichtung umfassend eine Empfangseinheit zum Empfang des Aktivierungssignals von dem Brandschutzroboter, wobei die Brandbekämpfungsvorrichtung eingerichtet ist, in Antwort auf das Aktivierungssignal eine Löschaktion zur Bekämpfung eines Brandes durchzuführen.

Die Erfindung betrifft ferner ein Brandschutzsystem, umfassend einen Brandschutzroboter der vorstehend genannten Art und zumindest eine Brandbekämpfungsvorrichtung. Bevorzugt umfasst das Brandschutzsystem insbesondere eine Vielzahl von Brandschutzrobotern und eine Vielzahl von Brandbekämpfungsvorrichtungen.

Hierbei sind die Brandschutzroboter derart eingerichtet, dass sie, wenn sie nicht aktiv sind, in einer Parkposition verbleiben. Diese Parkposition umfasst bevorzugt eine Position, in der die Brandschutzroboter mit entsprechenden Ladestationen verbunden sind, um so aufgeladen zu werden. Alternativ oder zusätzlich können die Brandschutzroboter in der Parkposition gewartet werden. Im Falle einer vorhandenen Brandbekämpfungseinheit kann diese in der Parkposition ebenfalls betriebsbereit gemacht werden.

Die Vielzahl von Brandschutzrobotern ist bevorzugt eingerichtet, alternierend den Brandschutzbereich zu überwachen. Hierzu sind die Brandschutzroboter eingerichtet, sich in regelmäßigen Intervallen aus der Parkposition hinauszubewegen und entlang eines vorgegebenen Navigationspfades durch den Brandschutzbereich zu navigieren. Die Intervalle, in denen die Brandschutzroboter die Parkposition verlassen und wieder zu ihr zurückkehren sind bevorzugt durch einen Nutzer vorprogrammiert und/oder bestimmt worden. Hierbei kann die Länge der Intervalle insbesondere von der Anzahl und der Akkuleistung der Brandschutzroboter und der Größe des Brandschutzbereichs abhängen.

Es ist besonders bevorzugt, dass die Navigationspfade für mehrere Brandschutzroboter, die gleichzeitig verwendet werden, hierbei so bestimmt werden, dass sie möglichst wenig Überlappungen aufweisen: Hierdurch können zum einen Kollisionen vermieden werden und zum anderen kann so eine effizientere Überwachung erfolgen.

Es ist ferner bevorzugt, dass die Vielzahl von Brandschutzrobotern eingerichtet ist, miteinander zu kommunizieren. Hierdurch kann beispielsweise sichergestellt werden, dass im Falle eines Defekts eines Brandschutzroboters dieser mit einem weiteren Brandschutzroboter kommuniziert, so dass der weitere Brandschutzroboter statt des defekten Brandschutzroboters zur Überwachung aktiviert wird. Hierdurch kann sichergestellt werden, dass stets ausreichend Brandschutzroboter den Brandschutzbereich überwachen.

Die Brandbekämpfungsvorrichtungen innerhalb des Brandschutzsystems können ortsfest sein. In diesem Fall sind die Brandbekämpfungsvorrichtungen also an einem Standort innerhalb des Brandschutzbereichs fest installiert. Alternativ oder zusätzlich kann das Brandschutzsystem auch eine oder mehrere mobile Brandbekämpfungsvorrichtungen umfassen. In jedem Fall haben die Brandbekämpfungsvorrichtungen keinen permanent festgelegten Standort. Das Brandschutzsystem ist jedoch bevorzugt eingerichtet, den Standort der mobilen Brandbekämpfungsvorrichtungen jederzeit ermitteln zu können.

Die mobilen Brandbekämpfungsvorrichtungen sind bevorzugt eingerichtet, im inaktiven Zustand eine Inaktivposition einzunehmen, in der die Brandbekämpfungsvorrichtungen an einem Standort geparkt sind. Bevorzugt sind die Brandbekämpfungsvorrichtungen eingerichtet, in der Inaktivposition durch eine Ladestation geladen zu werden. Alternativ oder zusätzlich können die Brandbekämpfungsvorrichtungen in der Inaktivposition auch gewartet und/oder wieder zur Brandbekämpfung bereit gemacht werden.

Die Brandbekämpfungsvorrichtungen bewegen sich aus dieser Inaktivposition hinaus, sobald sie das Aktivierungssignal erhalten. Bevorzugt folgenden die Brandbekämpfungsvorrichtungen nach ihrer Aktivierung entsprechenden Navigationspfaden, welche bevorzugt derart bestimmt werden, dass die einzelnen Brandbekämpfungsvorrichtungen nicht miteinander oder mit ortsfesten Brandbekämpfungsvorrichtungen kollidieren.

Gemäß einer bevorzugten Ausführungsform umfasst das Brandschutzsystem weiterhin eine Zentralvorrichtung umfassend eine Zentralkommunikationseinheit, die konfiguriert ist, das Aktivierungssignal von dem zumindest einen Brandschutzroboter zu empfangen und, in Antwort auf das Empfangen, an die zumindest eine Brandbekämpfungsvorrichtung zu übermitteln.

In einigen Ausführungen umfasst das Brandschutzsystem ferner eine Zentralvorrichtung. Die Zentralvorrichtung kann hierbei insbesondere eingerichtet sein, als zentrale Verarbeitungsstelle aller innerhalb des Systems gesammelten und ausgetauschten Informationen zu dienen. Ferner kann die Zentralvorrichtung als Kommunikationsschnittstelle zwischen dem zumindest einen Brandschutzroboter und der zumindest einen Brandbekämpfungsvorrichtung eingerichtet sein. Alternativ oder zusätzlich kann die Zentralvorrichtung auch als Kommunikationsschnittstelle für den Nutzer dienen.

In einigen Ausführungsformen kann die Zentralvorrichtung insbesondere eine Brandmeldezentrale, Löschsteuerzentrale, oder ähnliches umfassen oder als Teil einer Brandmeldezentrale, Löschsteuerzentrale oder ähnlichem ausgeführt sein. In einigen Ausführungen kann die Zentralvorrichtung auch eine eigenständige Zentrale sein, die keine Funktionalitäten der Brandmeldezentrale, Löschsteuerzentrale oder ähnlichem erfüllt, sondern einzig der Zentralisierung der Informationen von den Brandschutzrobotern und den Brandbekämpfungsvorrichtungen dient. Die Zentralvorrichtung kann also hierbei derart eingerichtet sein, dass die Informationen der Brandschutzroboter in ihr zusammenlaufen, um an die einzelnen Brandbekämpfungsvorrichtungen übermittelt zu werden.

In einigen Ausführungsformen ist die Zentralvorrichtung eingerichtet sein, bei Empfang eines Aktivierungssignals von einem Brandschutzroboter dieses Aktivierungssignal an die Brandbekämpfungsvorrichtungen innerhalb des Systems weiterzuleiten. In einer Ausführungsform erhält die Zentralvorrichtung außerdem eine Zielortindikation, die den Zielort des Brandereignisses angibt. Die Zielortindikation ist bevorzugt eine Angabe einer Rasterposition innerhalb des Navigationsrasters.

Die Zentralvorrichtung ist eingerichtet, diese Zielortindikation zu verwenden, um diejenigen ortsfesten Brandbekämpfungsvorrichtungen zu identifizieren, deren Standort sich nahe des Zielortes befindet. Die Zentralvorrichtung ist ferner eingerichtet, das Aktivierungssignal an die so identifizierten Brandbekämpfungsvorrichtungen zu übermitteln. Ferner ist die Zentralvorrichtung bevorzugt eingerichtet, die Zielortindikation an die mobilen Brandbekämpfungsvorrichtungen zu übermitteln, um es diesen zu ermöglichen, zum Zielort des Brandereignisses zu navigieren. Alternativ oder zusätzlich kann die Zentralvorrichtung eingerichtet sein, den mobilen Brandbekämpfungsvorrichtungen auch einen entsprechenden Navigationspfad, bestimmt auf Basis der Zielortindikation zu übermitteln.

Gemäß einer Modifikation umfasst die Zentralvorrichtung eine Anzeigeeinheit und eine Nutzerschnittstelle, wobei die Anzeigeeinheit dazu konfiguriert ist, auf Basis von Navigationsdaten, welche ein Navigationsraster mit einer Mehrzahl von Rasterkoordinaten umfassen, eine erste grafische Repräsentation des Navigationsrasters zu erzeugen, wobei das Navigationsraster den Brandschutzbereich definiert, und ferner eine zweite grafische Repräsentation eines Standorts des zumindest einen Brandschutzroboters und/oder eines Standorts der zumindest einen Brandbekämpfungsvorrichtung zu erzeugen, und die erste und die zweite grafische Repräsentation einem Nutzer gemeinsam anzuzeigen, und wobei die Nutzerschnittstelle konfiguriert ist, Eingaben von dem Nutzer zu empfangen und basierend auf den Eingaben ein Nutzerkontrollsignal zu erzeugen. In einer weiteren bevorzugten Ausführungsform umfasst das Nutzerkontrollsignal ein externes Navigationssignal für den zumindest einen Brandschutzroboter und die Zentralkommunikationseinheit ist konfiguriert, das externe Navigationssignal an den zumindest einen Brandschutzroboter zu übermitteln.

In einigen Ausführungsformen umfasst die Zentralvorrichtung eine Anzeigeeinheit und eine Nutzerschnittstelle. Die Anzeigeeinheit kann insbesondere als Bildschirm in der Zentralvorrichtung ausgeführt sein. Hierbei kann die Anzeigeeinheit auch als Touchscreen ausgeführt sein und damit gleichzeitig als Nutzerschnittstelle zur Entgegennahme von Nutzereingaben dienen. Alternativ oder zusätzlich kann die Nutzerschnittstelle auch als Tastatur, Maus oder ähnliches ausgestaltet sein.

Die Anzeigeeinheit ist bevorzugt eingerichtet, eine grafische Darstellung des Brandschutzbereichs bereitzustellen. Hierzu kann die Anzeigeeinheit eine erste grafische Repräsentation eines Navigationsrasters, das über den Brandschutzbereich gelegt ist, erzeugen und eine zweite grafische Repräsentation, die den Standort des zumindest einen Brandschutzroboters angibt. In einigen Ausführungsformen umfasst die zweite grafische Repräsentation insbesondere mehrere Standorte mehrerer Brandschutzroboter. Der Nutzer kann in diesem Fall mittels der Nutzerschnittstelle einen Brandschutzroboter auswählen und diesen über ein entsprechendes Nutzerkontrollsignal manuell aktivieren und/oder dessen Betriebsparameter und/oder Einstellungen einsehen und/oder anpassen.

In einigen Ausführungsformen umfasst die zweite grafische Repräsentation ferner die zumindest eine Brandbekämpfungsvorrichtung. Diese wird bevorzugt so dargestellt, dass sie von dem zumindest einen Brandschutzroboter unterschieden werden kann. Wenn die zweite grafische Repräsentation auch die Brandbekämpfungsvorrichtungen umfasst, können diese analog der Brandschutzroboter mittels der Nutzerschnittstelle aktiviert und/oder deren Betriebsparameter angepasst werden.

Das Nutzerkontrollsignal kann in einigen Ausführungsformen außerdem ein externes Navigationssignal umfassen, das es dem Nutzer erlaubt, die Brandschutzroboter und/oder die Brandbekämpfungsvorrichtungen über die Zentralvorrichtung zu steuern. Hierzu kann die zweite grafische Repräsentation über die erste grafische Repräsentation gelagert auf der Anzeigeeinheit angezeigt werden. Hierdurch kann der Nutzer den Standort der Brandschutzroboter und/oder der Brandbekämpfungsvorrichtungen innerhalb des Brandschutzbereichs identifizieren und auf Basis dieser Identifizierung die Brandschutzroboter und/oder die (mobilen) Brandbekämpfungsvorrichtungen navigieren. Hierzu kann der Nutzer die zu navigierende Brandschutzroboter und/oder Brandbekämpfungsvorrichtung zuvor manuellauswählen.

Gemäß einer weiteren Ausführungsform umfasst das Brandschutzsystem weiterhin zumindest eine Brandbekämpfungsvorrichtung, die als ortsfeste Brandbekämpfungsvorrichtung ausgeführt ist. Gemäss der Erfindung ist die Empfangseinrichtung ferner konfiguriert, eine Zielortindikation für den Zielort des Brandereignisses zu empfangen, wobei die Brandbekämpfungsvorrichtung zumindest eine Ausrichtungseinheit umfasst, die konfiguriert ist, einen Löschfluidauslass der Brandbekämpfungsvorrichtung basierend auf der Zielortindikation in Richtung des Zielorts auszurichten.

In einigen Ausführungen umfasst das Brandschutzsystem bevorzugt mehrere Brandbekämpfungsvorrichtungen, wobei zumindest eine davon ortsfest angeordnet ist. Im Falle der zumindest einen ortsfesten Brandbekämpfungsvorrichtungen wird das Aktivierungssignal nur an diejenigen ortsfesten Brandbekämpfungsvorrichtungen übermittelt, die sich so nah am Zielort des Brandereignisses befinden, dass sie das Brandereignis effizient bekämpfen können. Das bedeutet, dass der Zielort in Reichweite der Brandbekämpfungsvorrichtung liegen muss. Diese Reichweite variiert je nachdem, wie das Löschfluid ausgelassen wird.

Sie ist üblicherweise zwischen 50 bis 200 m, bevorzugt zwischen 70 und 100 m. In einer spezifischen Ausführungsform beträgt die Reichweite 70 bis 80 m bei einem Vollstrahl und 40 bis 50 m bei einem Sprühstrahl.

Die Auswahl der jeweiligen Brandbekämpfungsvorrichtungen kann durch den Brandschutzroboter durchgeführt werden. Alternativ oder zusätzlich kann die Zentralvorrichtung diese Auswahl treffen.

In einigen Ausführungsformen können auch sämtliche ortsfesten Brandbekämpfungsvorrichtungen das Aktivierungssignal erhalten. In diesem Fall umfassen die Brandbekämpfungsvorrichtungen bevorzugt jeweils eine Recheneinheit, die eingerichtet ist, bevorzugt auf Basis der Zielortindikation, zu prüfen, ob die jeweilige Brandbekämpfungsvorrichtung nahe genug am Zielort liegt, um den Brand zu bekämpfen. Die Recheneinheit ist eingerichtet, nur bei positiver Prüfung die Brandschutzaktion, insbesondere die Brandbekämpfungsaktion, einzuleiten.

Alternativ oder zusätzlich können die Zentralvorrichtung und/oder der zumindest eine Brandschutzroboter eingerichtet sein, eine Vorauswahl zu treffen und das Aktivierungssignal nur an eine vorausgewählte Untermenge von Brandbekämpfungsvorrichtungen zu übermitteln. Auch in diesem Fall bestimmen sodann die Brandbekämpfungsvorrichtungen, bevorzugt auf Basis der Zielortindikation, ob sie den Brand effizient bekämpfen können und beginnen nur bei einer positiven Prüfung mit der Brandbekämpfung. Alternativ oder zusätzlich können die Brandbekämpfungsvorrichtungen hierzu auch vorbeugend Löschfluid in die Umgebung des Brandereignisses ausgeben, also das Löschfluid auf einen Bereich ausgeben, in dem sich der Brand noch nicht ausgebreitet hat. Hierdurch kann die Ausbreitung des Brandes auf diesen Bereich verhindert und/oder allenfalls verlangsamt werden.

In einigen Ausführungen umfasst das Brandschutzsystem ferner zumindest eine Brandbekämpfungsvorrichtung, die als mobile Brandbekämpfungsvorrichtung umfassend zumindest eine Antriebseinheit ausgeführt ist. In einigen Modifikationen ist die Empfangseinheit ferner konfiguriert, eine Zielortindikation für den Zielort des Brandereignisses zu empfangen, und die zumindest eine Antriebseinheit ist konfiguriert, die zumindest eine Brandbekämpfungsvorrichtung basierend auf der Zielortindikation selbsttätig zu dem Zielort des Brandereignisses zu navigieren und bei Erreichen des Zielorts einen Löschfluidauslass der Brandbekämpfungsvorrichtung zu dem Zielort des Brandereignisses auszurichten.

In einigen Ausführungsformen kann das Brandschutzsystem alternativ oder zusätzlich auch einen oder mehrere mobile Brandbekämpfungsvorrichtungen umfassen, also Brandbekämpfungsvorrichtungen, die eine Antriebseinheit aufweisen, die es ihnen erlauben, von einem Ort zum andere zu fahren. Diese Brandbekämpfungsvorrichtungen können eingerichtet sein, die Zielortindikation auszuwerten, um so den Zielort des Brandereignisses zu ermitteln. Sodann können die Brandbekämpfungsvorrichtungen ausgebildet sein, einen Bewegungspfad zum Zielort zu ermitteln und zum Zielort zu navigieren. Bevorzugt erfolgt diese Navigation automatisch in Antwort auf das Aktivierungssignal. Alternativ oder zusätzlich können die Brandbekämpfungsvorrichtungen auch eingerichtet sein, um über eine Fernsteuerung navigiert zu werden. In diesem Fall ist ein Bestimmen eines Navigationspfades nicht erforderlich. Ist ein solcher Navigationspfad dennoch ermittelt wurden, kann dieser dem Nutzer angezeigt werden, so dass der Nutzer bei der Fernsteuerung dem Navigationspfad folgen kann, wenn gewünscht.

In einem weiteren Aspekt betrifft die Erfindung ein Verfahren zum Betrieb eines Brandschutzsystems nach Anspruch 15.

In einigen Ausführungsformen umfasst das Verfahren ferner den Schritt: (d) Aktivieren, in Antwort auf das Aktivierungssignal, der zumindest einen Brandbekämpfungsvorrichtung. In einigen Ausführungsformen umfasst Schritt (c) ferner ein Übermitteln einer Zielortindikation für einen Zielort eines Brandereignisses umfasst. Das Verfahren umfasst außerdem den Schritt (e) selbsttätiges Navigieren der zumindest einen Brandbekämpfungsvorrichtung basierend auf der Zielortindikation zu dem Zielort des Brandereignisses.

Das erfindungsgemäße Verfahren macht sich die Vorteile und bevorzugten Ausführungsformen des erfindungsgemäßen Brandschutzroboters und des erfindungsgemäßen Brandschutzsystems zunutze. Die bevorzugten Ausführungsformen und Weiterbildungen des Brandschutzroboters sowie des Brandschutzsystems sind daher zugleich bevorzugte Ausführungsformen und Weiterbildungen des Verfahren, weswegen diesbezüglich auf die obigen Ausführungen verwiesen wird.

Die Erfindung wird nachfolgend unter Bezugnahme auf die beigefügten Figuren anhand bevorzugter Ausführungsbeispiele näher beschrieben. Hierbei zeigen:
- Fig. 1: eine schematische Darstellung eines erfindungsgemäßen Brandschutzsystems gemäß einer ersten Ausführungsform.
- Fig. 2: eine schematische Darstellung eines Brandschutzroboters
- Fig. 3: eine schematische Darstellung eines erfindungsgemäßen Brandschutzsystems gemäß einer zweiten Ausführungsform.
- Fig. 4: eine schematische Darstellung eines erfindungsgemäßen Brandschutzsystems gemäß einer dritten Ausführungsform.
- Fig. 5: eine schematische Darstellung einer Anzeigevorrichtung umfassend eine grafische Repräsentation des Brandschutzbereichs und der darin befindlichen Brandschutzroboter.

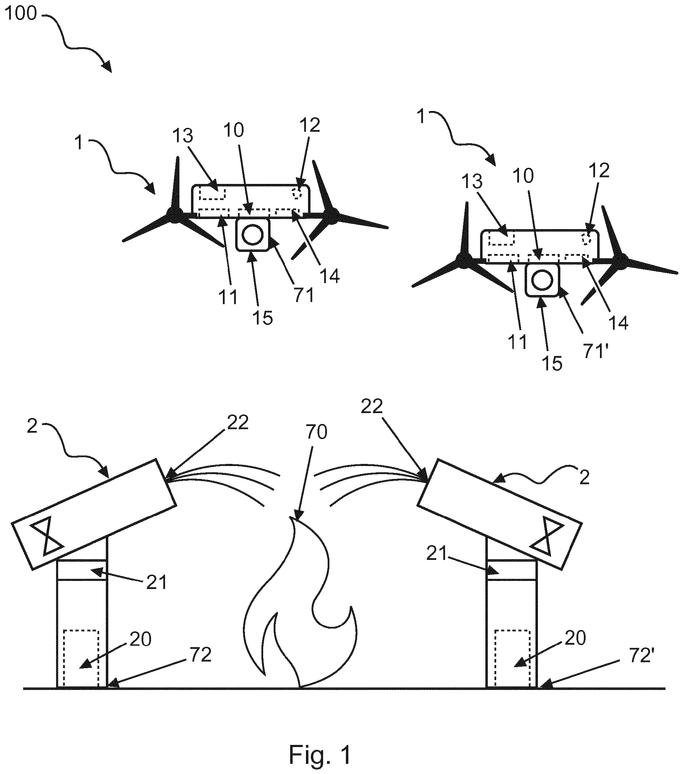

Die Figur 1 zeigt schematisch ein Brandschutzsystem 100. Das Brandschutzsystem 100 umfasst die Brandschutzroboter 1, die in der Ausführungsform des Brandschutzsystems 1 als Brandschutzdrohnen ausgeführt sind, und die ortsfesten Brandbekämpfungsvorrichtungen 2.

Die Brandschutzroboter 1 umfassen jeweils eine Steuereinheit 10, eine Brandsensoreinheit 11, eine Kommunikationseinheit 12, eine Prozessoreinheit 13, eine Umgebungssensoreinheit 14 und eine Kamera 15 und befinden sich an den Schutzpositionen 71 und 71'. Die ortfesten Brandbekämpfungsvorrichtungen 2 umfassen jeweils eine Empfangseinheit 20, eine Ausrichtungseinheit 21 und einen Löschfluidauslass 22 und befinden sich an den Löschpositionen 72 und 72`. Auch wenn in der Fig. 1 zur Vereinfachung der Darstellung nur je zwei Brandschutzroboter 1 und zwei ortsfeste Brandbekämpfungsvorrichtungen 2 gezeigt ist, umfasst das Brandschutzsystem 100 eine Vielzahl von Brandschutzrobotern 1 und ortsfesten Brandbekämpfungsvorrichtungen 2.

Im spezifischen Beispiel der Fig. 1 ist ein Brandschutzroboter 1 eingerichtet, einen ihm zugewiesenen Brandschutzbereich zu überwachen. Hierzu wird der Brandschutzroboter 1 mittels der Steuereinheit 10 entlang eines vorgegebenen Navigationspfades durch den Brandschutzbereich navigiert. In der spezifischen Ausführungsform der Fig. 1, in der die Brandschutzroboter 1 als Brandschutzdrohnen ausgeführt sind, bedeutet dies, dass der Brandschutzroboter 1 den Brandschutzbereich entsprechend des Navigationspfades überfliegt.

In der spezifischen Ausführungsform der Fig. 1 ermittelt die Steuereinheit 10 den Navigationspfad auf Basis von Navigationsdaten, die ein Navigationsraster mit einer Vielzahl von Rasterkoordinaten umfassen. Das Navigationsraster ist hierbei eingerichtet, den durch den Brandschutzroboter 1 abzudeckenden Brandschutzbereich vollständig zu definieren. Auf Basis der Navigationsdaten ist es der Steuereinheit 10 des Brandschutzroboters 1 möglich, die Position, im Falle der Ausführungsform der Fig. 1 die Sicherheitsposition 71, des Brandschutzroboters 1 entlang des Navigationspfades zu ermitteln.

Während des Navigierens entlang des Navigationspfades durch den Brandschutzbereich wird mittels der Brandsensoreinheit 11 zumindest eine Brandkenngröße erfasst. Hierzu umfasst die Brandsensoreinheit 11 einen oder mehrere Sensoren, die jeweils der Ermittlung einer bestimmten Brandkenngröße dienen.

Ferner wird während des Navigierens die Umgebungssensoreinheit 14 des Brandschutzroboters 1 verwendet, um entlang des Navigationspfades Umgebungsparameter der Umgebung des Brandschutzbereiches zu ermitteln. In der spezifischen Ausführungsform der Fig. 1 ermittelt die Umgebungssensoreinheit 14 insbesondere die Witterungsverhältnisse innerhalb des Brandschutzbereichs sowie mögliche Hindernisse auf dem Navigationspfad zu identifizieren. Werden Hindernisse entdeckt oder wird festgestellt, dass ein Navigieren wie vorgegeben aufgrund der Witterung nicht fortgesetzt werden soll, können diese Informationen der Umgebungssensoreinheit 14 an die Steuereinheit 10 weitergegeben werden. Die Steuereinheit 10 kann dann den Navigationspfad entsprechend anpassen.

Wenn die Brandsensoreinheit 11 entlang des Navigationspfades zumindest eine Brandkenngröße erfasst, die indikativ für ein Brandereignis ist, kann die Brandkenngröße zusammen mit den Navigationsdaten an die Prozessoreinheit 13 gegeben werden. Die Prozessoreinheit 13 bestimmt dann, auf Basis der Brandkenngröße und der Navigationsdaten, den Zielort 70 des Brandereignisses und damit den Zielort, an dem die Brandbekämpfung stattfinden soll. Die Prozessoreinheit 13 erzeugt sodann eine Zielortindikation, die angibt, wo sich der Zielort 70 befindet.

In der spezifischen Ausführungsform der Fig. 1 bewirkt das Erfassen der zumindest einen Brandkenngröße ferner ein Aktivieren der Kamera 15 des Brandschutzroboters 1, die in der Ausführungsform der Fig. 1 als Wärmekamera ausgeführt ist. Die Kamera 15 erhält die Zielortindikation von der Prozessoreinheit 13. In Antwort auf die Zielortindikation richtet die Kamera ihren Aufnahmechip in Richtung des Zielortes 70 aus und nimmt so zumindest ein Wärmebild des Zielortes 70 auf.

Die Kamera 15 übermittelt das Wärmebild dann an die Prozessoreinheit 13. Prozessoreinheit 13 wertet das Wärmebild aus und ist eingerichtet, basierend auf dem Wärmebild beispielsweise zu bestätigen, dass ein Brandereignis vorliegt, sowie die Spezifikationen des Brandereignisses, wie Ausbreitung, Temperatur und ähnliches, zu ermitteln. In einigen Ausführungen kann auf Basis des Wärmebildes auch die Zielortindikation näher spezifiziert werden.

In der Ausführungsform der Fig. 1 wertet die Prozessoreinheit 13 das Wärmebild aus, um zu bestimmen, ob tatsächlich ein Brandereignis vorliegt. Wird ein Brandereignis bestätigt, übermittelt die Prozessoreinheit 13 eine entsprechende Indikation und die Zielortindikation an die Kommunikationseinheit 12.

Hierdurch wird die Kommunikationseinheit 12 veranlasst, ein Aktivierungssignal umfassend die Zielortindikation an die Empfangseinheit 20 zumindest einer ortsfesten Brandbekämpfungsvorrichtung 2 zu übermitteln. In der spezifischen Ausführungsform der Fig. 1 ist die Kommunikationseinheit 12 hierzu insbesondere eingerichtet, auf Basis der Zielortindikation zu ermitteln, welche ortsfesten Brandbekämpfungsvorrichtungen 2 sich in der Nähe des Zielorts 70 befinden und das Aktivierungssignal umfassend die Zielortindikation an genau die ortsfesten Brandbekämpfungsvorrichtungen 2 zu übermitteln deren Standort sich nahe dem Zielort 70 befindet.

Die ortsfesten Brandbekämpfungsvorrichtungen 2 empfangen, über die Empfangseinheit 20, das Aktivierungssignal und sind eingerichtet, auf Basis der Zielortindikation den Zielort 70 des Brandereignisses zu ermitteln. In Antwort auf die Ermittlung des Zielorts 70 wird die Ausrichtungseinheit 21 veranlasst, die jeweilige Brandbekämpfungsvorrichtung 2 in Richtung des Zielorts 70 auszurichten, sich also in die Löschposition 72, 72' zu begeben. Im Falle einer ortsfesten Brandbekämpfungsvorrichtung 2 ist die Löschposition 72, 72` also eine Position, in der sich die Brandbekämpfungsvorrichtung 2, befindlich an einem festgelegten Standort, in Richtung des Zielortes 70 des Brandereignisses ausgerichtet hat.

In der spezifischen Ausführungsform der Fig. 1 wird hierzu der Löschfluidauslass 22 der Brandbekämpfungsvorrichtung 20 in Richtung des Zielorts 70 ausgerichtet. Im Anschluss an die Ausrichtung veranlasst das Aktivierungssignal die Brandbekämpfungsvorrichtung 2, eine Brandschutzaktion, die in der Ausführung der Fig. 1 eine Löschaktion umfasst, einzuleiten, also Löschfluid auf den Brand auszugeben.

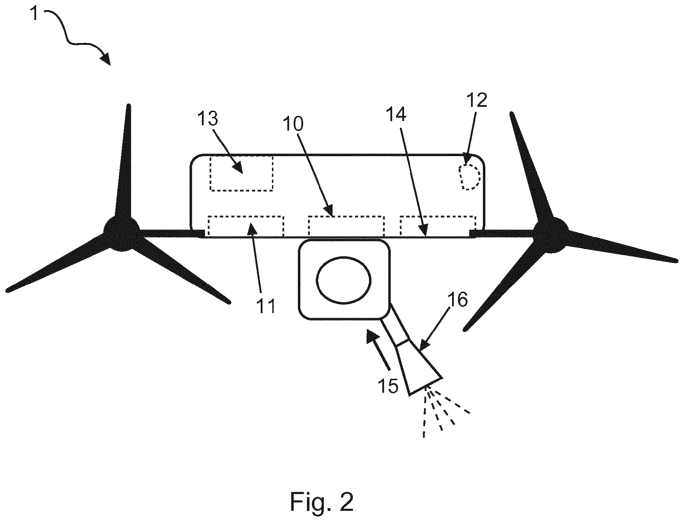

Die Figur 2 zeigt eine schematische Darstellung eines erfindungsgemäßen Brandschutzroboters 1 in einer zweiten Ausführungsform. In der Ausführungsform der Fig. 2 ist der Brandschutzroboter 1 erneut als Brandschutzdrohne ausgeführt und umfasst eine Steuereinheit 10, eine Brandsensoreinheit 11, eine Kommunikationseinheit 12, eine Prozessoreinheit 13, eine Umgebungssensoreinheit 14, eine Kamera 15 und eine Brandbekämpfungseinheit 16.

Die Funktionsweise des Brandschutzroboters 1 gemäß der Fig. 2 entspricht der Funktionsweise wie im Zusammenhang mit der Fig. 1 beschrieben. Anders als in der Fig. 1 umfasst der Brandschutzroboter 1 in der Ausführung der Fig. 2 jedoch auch die Brandbekämpfungseinheit 16 zur Durchführung einer Erstbekämpfungsaktion. In der Ausführungsform der Fig. 2 ist die Brandbekämpfungseinheit 16 als Löscheinheit zur Durchführung einer Erstlöschaktion ausgestaltet.

In dieser Ausführungsform führt das Erfassen der zumindest einen Brandkenngröße durch die Brandsensoreinheit 11 des Brandschutzroboters 1 und das Bestätigen des Brandereignisses mittels des Wärmebildes der Kamera 15 zu einer Aktivierung der Brandbekämpfungseinheit 16.

Hierzu erhalten die Steuereinheit 10 und die Brandbekämpfungseinheit 16 die Zielortindikation von der Prozessoreinheit 13. In Antwort auf die Zielortindikation veranlasst die Steuereinheit 10 den Brandschutzroboter 1, sich in der Sicherheitsposition 71 zu positionieren, in der der Brandschutzroboter 1 einerseits so angeordnet ist, dass er nicht durch das Brandereignis beschädigt wird, andererseits jedoch eine Erstlöschaktion durchführen kann. Ferner veranlasst die Zielortindikation die Brandbekämpfungseinheit 16 des Brandschutzroboters 1, sich in Richtung des Zielortes 70 auszurichten, so dass die Brandbekämpfungseinheit 16 die Erstbekämpfungsaktion einleiten kann. In der spezifischen Ausführungsform der Fig. 2, in der die Brandbekämpfungseinheit 16 eine Löscheinheit ist, richtet die Brandbekämpfungseinheit 16 also den Löschfluidauslass in Richtung des Zielortes 70 aus und leitet sodann die Erstlöschaktion ein. Bevorzugt setzt der Brandschutzroboter 1 das Erfassen der Brandkenngröße durch die Brandsensoreinheit 11 während der Erstlöschaktion fort, um so Informationen über die Wirksamkeit der Erstlöschaktion zu sammeln.

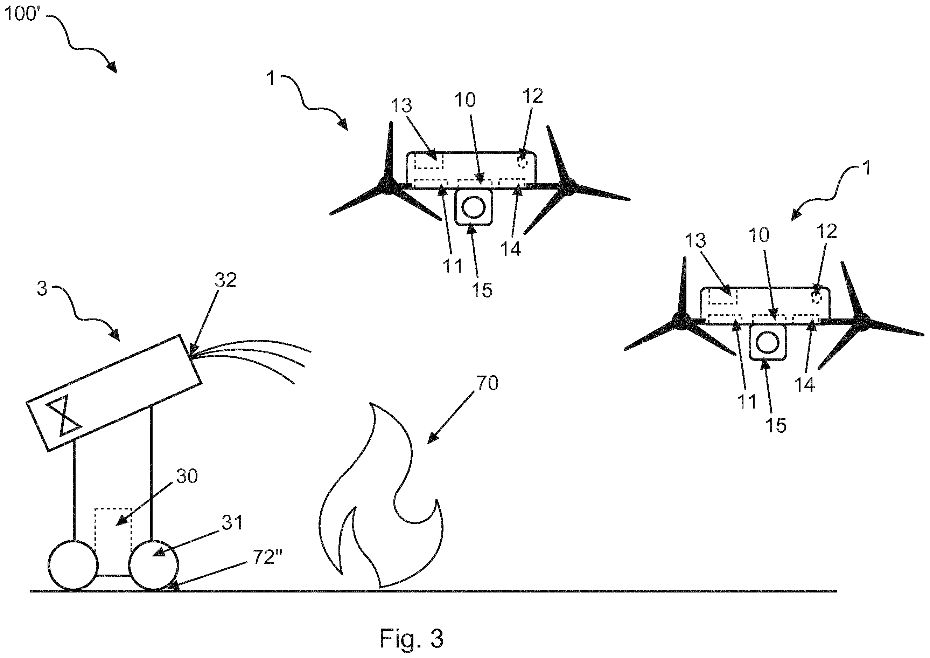

Die Figur 3 zeigt schematisch ein Brandschutzsystem 100` gemäß einer weiteren Ausführungsform. Das Brandschutzsystem 100` umfasst zumindest einen Brandschutzroboter 1 und zumindest eine mobile Brandbekämpfungsvorrichtung 3. Die mobilen Brandbekämpfungsvorrichtungen 3 umfassen eine Antriebseinheit 31 zum Navigieren der mobilen Brandbekämpfungsvorrichtungen 3 von einer Ausgangsposition in eine Löschposition 72". Auch wenn in der Fig. 3 nur eine mobile Brandbekämpfungsvorrichtung 3 und nur zwei Brandschutzroboter 1 aufgezeigt sind, kann das Brandschutzsystem 100` auch weitere mobile Brandbekämpfungsvorrichtungen 3 und/oder weitere ortsfeste Brandbekämpfungsvorrichtungen 2 und/oder weitere Brandschutzroboter umfassen.

Die Funktionsweise der Brandschutzroboter 1 des Brandschutzsystems 100` entspricht der Funktionsweise der Brandschutzroboter 1 des Brandschutzsystems 100 wie im Zusammenhang mit der Fig. 1 beschrieben. Allerdings unterscheidet sich das Brandschutzsystem 100` gemäß der Fig. 3 von dem Brandschutzsystem 100 der Fig. 1 darin, dass das Brandschutzsystem 100` auch mobile Brandbekämpfungsvorrichtungen 3 umfasst.

Die mobile Brandbekämpfungsvorrichtung 3 umfasst eine Empfangseinheit 30 zum Empfang des Aktivierungssignals umfassend die Zielortindikation von der Kommunikationseinheit 12 des Brandschutzroboters 1. Die Brandbekämpfungsvorrichtung 3 verwendet die Zielortindikation um den Zielort 70 des Brandereignisses zu ermitteln. Die mobile Brandbekämpfungsvorrichtung 3 ermittelt sodann einen Bewegungspfad von ihrer Ausgangsposition, also ihrem derzeitigen Standort, in die Löschposition 72" in einigem Abstand zum Zielort 70. Bei der Ermittlung des Bewegungspfades werden bevorzugt zusätzliche Informationen, insbesondere über die Umgebung des Brandereignisses, die Witterungsbedingungen und ähnliches, miteinbezogen, um so eine möglichst effiziente Brandschutzaktion durchführen zu können.

In der spezifischen Ausführungsform der Fig. 3 navigiert die mobile Brandbekämpfungsvorrichtung 3 in Antwort auf das Aktivierungssignal also selbsttätig entlang des Bewegungspfades von der Ausgangsposition in Richtung des Zielorts 70. Beim Zielort 70 positioniert sich die Brandbekämpfungsvorrichtung 3 dann an einer Stelle, die von dem Zielort derart beabstandet ist, dass die Brandbekämpfungsvorrichtung 3 nicht beschädigt wird, jedoch die Brandschutzaktion effektiv durchführen kann. An dieser Stelle, beabstandet vom Zielort, richtet die Brandbekämpfungsvorrichtung 3 einen Löschfluidauslass sodann bevorzugt so in Richtung des Zielortes 70 aus, dass sie den Brand bekämpfen kann und begibt sich so in die Löschposition 72". In der Löschposition 72" leitet die Brandbekämpfungsvorrichtung sodann eine Brandschutzaktion ein.

In der Fig. 3 ist diese Brandschutzaktion eine Löschaktion. Hierzu positioniert sich die mobile Brandbekämpfungsvorrichtung 3 so im Verhältnis zum Zielort 70, dass das aus dem Löschfluidauslass 32 ausgelassene Löschfluid den Brand löschen kann, also so dass gewährleistet ist, dass das aus dem Löschfluidauslass 32 ausgelassene Löschfluid bei den gegebenen Witterungsbedingungen und der entsprechenden Reichweite der Brandbekämpfungsvorrichtung 3 auf das Brandereignis am Zielort 70 gelangen kann.

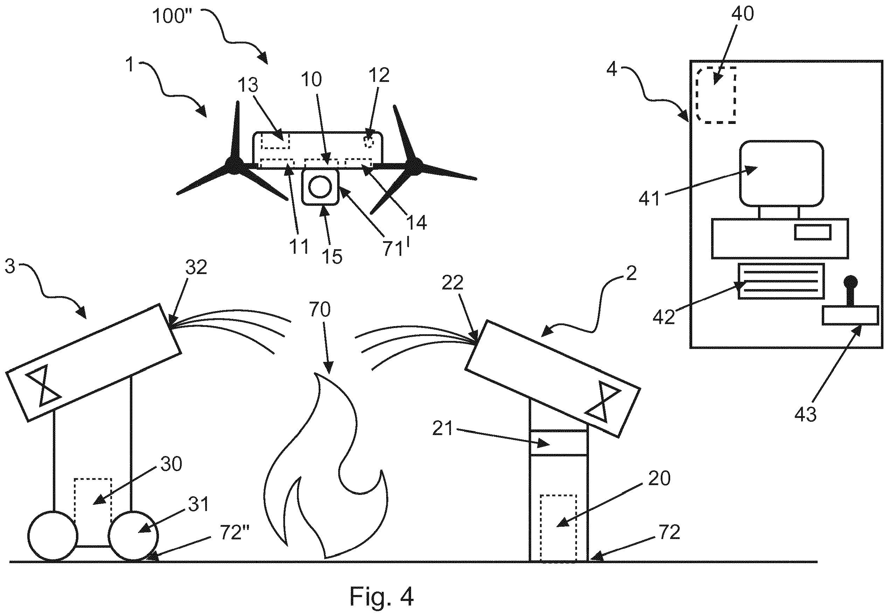

In der Figur 4 ist schematisch ein Brandschutzsystem 100" gemäß einer weiteren Ausführungsform dargestellt. Das Brandschutzsystem 100" umfasst zumindest einen Brandschutzroboter 1, zumindest eine ortsfeste Brandbekämpfungsvorrichtung 2 und zumindest eine mobile Brandbekämpfungsvorrichtung 3. Die Funktionalitäten des Brandschutzroboters 1, der ortsfesten Brandbekämpfungsvorrichtung 2 und der mobilen Brandbekämpfungsvorrichtung 3 entsprechend weitestgehend den Funktionalitäten wie im Zusammenhang mit den Fig. 1 bis 3 beschrieben.

Ferner umfasst das Brandschutzsystem 100" eine Zentralvorrichtung 4. Die Zentralvorrichtung 4 umfasst eine Zentralkommunikationseinheit 40, eine Anzeigeeinheit 41 und die Nutzerschnittstellen 42 und 43. Anders als in den Ausführungsformen der Fig. 1 bis 3 sind der Brandschutzroboter 1, die ortsfeste Brandbekämpfungsvorrichtung 2 und die mobile Brandbekämpfungsvorrichtung 3 in der Ausführungsform der Fig. 4 eingerichtet, um zusätzlich zur selbsttätigen Navigation und Aktivierung auch manuell durch einen Nutzer kontrolliert zu werden.

Hierzu verläuft die Signalkommunikation zwischen dem Brandschutzroboter 1 und den Brandbekämpfungsvorrichtungen 2, 3 über die Zentralkommunikationseinheit 40 der Zentralvorrichtung 4. Die Zentralvorrichtung 4 verfügt ferner alle Informationen über den Brandschutzbereich wie dessen Größe, welche Abschnitte durch welchen oder welche Brandschutzroboter 1 überwacht werden sollen, an welchen Standorten innerhalb des Brandschutzbereichs ortsfeste Brandbekämpfungsvorrichtungen 2 angeordnet sind und ähnliches.

Die Zentralvorrichtung 4 erhält über die Zentralkommunikationseinheit alle Signale, die zwischen den Brandschutzrobotern 1 und den ortsfesten und mobilen Brandbekämpfungsvorrichtungen ausgetaucht werden. Dadurch ist die Zentralvorrichtung jederzeit auch über die (derzeitigen) Standorte (beispielsweise an der Sicherheitsposition 71') der Brandschutzroboter 1 und die (derzeitigen) Standorte (beispielsweise an den Löschpositionen 72, 72") der mobilen Brandbekämpfungsvorrichtungen 3 informiert. Die Zentralvorrichtung 4 hat daher zu jeder Zeit den Überblick über die Standorte aller Systemelemente innerhalb des Brandschutzbereichs.

Die Zentralvorrichtung 4 ist eingerichtet, mittels der Anzeigeeinheit 41 eine grafische Darstellung für den Nutzer auszugeben. Diese grafische Darstellung umfasst eine erste grafische Repräsentation 50 des Navigationsrasters, welches den Brandschutzbereich definiert und eine zweite grafische Repräsentation zumindest eines Standorts zumindest eines Brandschutzroboters 1 und/oder zumindest einer Brandbekämpfungsvorrichtung 2, 3. Basierend auf der grafischen Darstellung umfassend die erste und die zweite grafische Repräsentation kann der Nutzer dann die Brandschutzroboter 1 und/oder die Brandbekämpfungsvorrichtungen 2, 3 über die Nutzerschnittstellen 42, 43 manuell steuern.

In der spezifischen Ausführungsform der Fig. 4 bedeutet dies insbesondere, dass der Nutzer die Brandschutzroboter 1 und die mobilen Brandbekämpfungsvorrichtungen 3 manuell navigieren kann, beispielsweise von ihrem jeweiligen Standort zum Zielort 70. Hierzu können die Brandschutzroboter 1 und/oder die Brandbekämpfungsvorrichtungen 3 auch je eine Kamera umfassen, die während der manuellen Steuerung aktiviert ist und Bilder an die Zentralkommunikationseinheit 40 der Zentralvorrichtung 4 übermittelt. Diese Bilder können dem Nutzer auf der Anzeigeeinheit, beispielsweise in einem zweiten Fenster, dann zur Unterstützung des Navigierens angezeigt werden.

Ferner kann der Nutzer auch die Ausrichtung der mobilen und/oder ortsfesten Brandbekämpfungsvorrichtungen 2, 3 in Richtung des Zielorts manuell kontrollieren. Bevorzugt umfasst die zweite grafische Repräsentation hierfür eine Ausrichtungsindikation, zeigt also an, in welche Richtung beispielsweise die Löschfluidauslässe der einzelnen Brandbekämpfungsvorrichtungen gerichtet sind. Auch hier kann dem Nutzer zusätzlich das Bild einer Kamera angezeigt werden.

Um die manuelle Steuerung durchzuführen, wählt der Nutzer bevorzugt einen Brandschutzroboter 1 und/oder eine mobile oder ortsfeste Brandbekämpfungsvorrichtung 2,3 aus und führt die Steuerung für den ausgewählten Brandschutzroboter 1 oder die ausgewählte Brandbekämpfungsvorrichtung 2,3 durch. Bevorzugt handeln die weiteren Systemelemente während dieser Zeit weiterhin automatisch. In anderen Ausführungsformen kann die manuelle Steuerung auch das selbsttätige Agieren der Systemelemente außer Betrieb setzen.

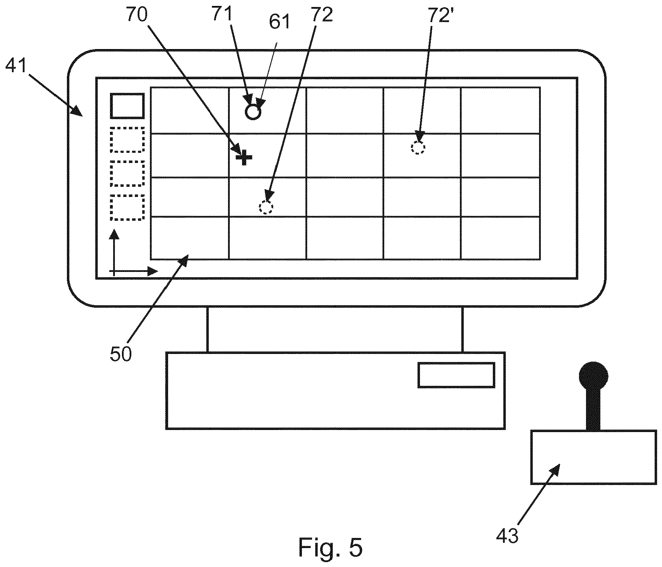

Die Figur 5 zeigt schematisch eine grafische Darstellung auf der Anzeigeeinheit 41 der Zentralvorrichtung 4 zum Zwecke der manuellen Steuerung. Ferner zeigt die Fig. 5 schematisch eine Nutzerschnittstelle 43, die in der Ausführungsform der Fig. 5 als Joystick ausgeführt ist. Die Nutzerschnittstelle dient der manuellen Steuerung der Systemelemente.

Die Anzeigeeinheit 41 zeigt dem Nutzer eine grafische Darstellung, in der die erste grafische Repräsentation 50 des Navigationsrasters und die zweite grafische Repräsentation des Standorts des Brandschutzroboters 1, welcher vorliegend der Sicherheitsposition 71 entspricht, des Standorts der ortsfesten Brandbekämpfungsvorrichtung 2, welche sich vorliegend in der Sicherheitsposition 72 befindet, und des Standorts der mobilen Brandbekämpfungsvorrichtung 3, welche sich vorliegend in der Sicherheitsposition 72` befindet, überlagert angezeigt werden. Ferner umfasst die grafische Darstellung noch eine dritte grafische Repräsentation des Zielortes 70 an dem ein Brandereignis detektiert worden ist, sowie eine grafische Darstellung der Informationen über die Umgebung, wie beispielsweise Informationen bezüglich der derzeitigen Witterungsverhältnisse, und eine Vielzahl von Auswahlmitteln 61, mit denen der Nutzer die zu kontrollierenden Brandschutzroboter 1 und/oder Brandbekämpfungsvorrichtungen 2, 3, auswählen kann.

In der spezifischen nicht beanspruchten Ausführungsform der Fig. 5 hat der Nutzer über die Auswahlmittel 6 den Brandschutzroboter 1 in der Sicherheitsposition 71 ausgewählt, um diesen manuell zu steuern. Der Nutzer kann dann die Nutzerschnittstelle 43 verwenden, um den Brandschutzroboter 1 beispielsweise aus der Sicherheitsposition 71 vom Zielort 70 des Brandereignisses weg zu steuern, beispielsweise in die Parkposition wenn der Brandschutzroboter nicht mehr benötigt wird und/oder anzeigt, dass er geladen werden muss. In der Ausführungsform der Fig. 5 erfolgt diese Steuerung rein auf Basis der Rasterkoordinaten. Dem Nutzer wird hierbei in Echtzeit die Bewegung des Brandschutzroboters 1 angezeigt und zwar durch eine kontinuierliche Anpassung der grafischen Repräsentation des Standorts des Brandschutzroboters 1 weg von der Schutzposition 71. Das bedeutet, die grafische Repräsentation des Standorts wird kontinuierlich an die Bewegung des Brandschutzroboters 1 angepasst.

Nachdem der Nutzer die Steuerung des Brandschutzroboters 1 beendet hat, kann er über die Auswahlmittel 61 sodann die ortsfeste Brandbekämpfungsvorrichtung 2 in der Löschposition 72 oder die mobile Brandbekämpfungsvorrichtung 3 in der Löschposition 72` auswählen und diese entsprechend manuell kontrollieren, wie im Zusammenhang mit der Fig. 4 beschrieben. So kann ein Brandschutzsystem 100" bereitgestellt werden, in dem eine automatische sowie manuelle Steuerung der einzelnen Systemelemente ermöglicht wird. Auch wenn im Zusammenhang mit der Fig. 5 eine manuelle Steuerung des zumindest einen Brandschutzroboters 1 und/oder der zumindest einen ortsfesten und/oder mobilen Brandbekämpfungsvorrichtung 2, 3 erläutert wurde, kann die grafische Darstellung wie schematisch in der Fig. 5 dargestellt auch nur dazu dienen, dem Nutzer die automatische Navigation der einzelnen Systemelemente durch den Brandschutzbereich darzustellen, so dass sich der Nutzer ein Bild von der Situation machen kann, ohne aktiv in den Prozess einzugreifen.

### Bezugszeichenliste

| | |
|---|---|
| Brandschutzroboter | 1 |
| Steuereinheit | 10 |
| Brandsensoreinheit | 11 |
| Kommunikationseinheit | 12 |
| Prozessoreinheit | 13 |
| Umgebungssensoreinheit | 14 |
| Kamera | 15 |
| Brandbekämpfungseinheit | 16 |
| Ortsfeste Brandbekämpfungsvorrichtung | 2 |
| Mobile Brandbekämpfungsvorrichtung | 3 |
| Empfangseinheit | 20, 30 |
| Ausrichtungseinheit | 21 |
| Löschfluidauslass | 22, 32 |
| Antriebseinheit | 31 |
| Zentralvorrichtung | 4 |
| Zentralkommunikationseinheit | 40 |
| Anzeigeeinheit | 41 |
| Nutzerschnittstelle | 42, 43 |
| Erste grafische Repräsentation | 50 |
| Auswahlmittel | 61 |
| Zielort des Brandereignisses | 70 |
| Sicherheitsposition | 71, 71' |
| Löschposition | 72, 72`, 72" |
| Brandschutzsystem | 100, 100', 100" |

## Patentansprüche

1. Brandschutzsystem (100), umfassend:
zumindest einen Brandschutzroboter (1), und
zumindest eine Brandbekämpfungsvorrichtung (2, 3), welche getrennt von dem Brandschutzroboter (1) ausgeführt ist; wobei der Brandschutzroboter (1) umfasst:
eine Steuereinheit (10), die ausgebildet ist, den Brandschutzroboter entlang eines vorgegebenen Navigationspfades zu bewegen;
eine Brandsensoreinheit (11), die ausgebildet ist, zumindest eine Brandkenngröße entlang des vorgegebenen Navigationspfades zu erfassen; und
eine Prozessoreinheit, die ausgebildet ist, auf Basis der zumindest einen Brandkenngröße und des Navigationspfades einen Zielort eines Brandereignisses zu ermitteln,
**gekennzeichnet dadurch, dass**
der Brandschutzroboter (1) ferner eine Kommunikationseinheit (12) umfasst, die ausgebildet ist, in Antwort auf das Erfassen der zumindest einen Brandkenngröße ein Aktivierungssignal und eine Zielortindikation, die den ermittelten Zielort angibt, an die zumindest eine von dem Brandschutzroboter getrennte Brandbekämpfungsvorrichtung (2, 3) zu übermitteln, wobei die die Brandbekämpfungsvorrichtung (2, 3) eine Empfangseinheit (20, 30) zum Empfang des Aktivierungssignals und der Zielortindikation von dem Brandschutzroboter (1) umfasst und wobei die Brandbekämpfungsvorrichtung (2, 3) eingerichtet ist, in Antwort auf das Aktivierungssignal eine Löschaktion zur Bekämpfung eines Brandes durchzuführen, wobei die Brandbekämpfungsvorrichtung (2, 3) zumindest eine Ausrichtungseinheit (21) umfasst, welche konfiguriert ist, einen Löschfluidauslass (22) der Brandbekämpfungsvorrichtung basierend auf der Zielortindikation in Richtung des Zielorts auszurichten, und die Löschaktion ein Ausrichten der Brandbekämpfungsvorrichtung dergestalt, dass ein Löschfluidauslass der Brandbekämpfungsvorrichtung das Löschfluid in Richtung des Brandereignisses ausgeben kann, umfasst.

2. Brandschutzsystem (100) nach Anspruch 1, wobei
die Steuereinheit (10) den vorgegebenen Navigationspfad auf Basis von Navigationsdaten ermittelt, welche ein Navigationsraster mit einer Vielzahl von Rasterkoordinaten umfassen, wobei das Navigationsraster einen Brandschutzbereich definiert.

3. Brandschutzsystem (100) nach zumindest einem der Ansprüche 1 oder 2, wobei
die Steuereinheit (10) ferner konfiguriert ist, den vorgegebenen Navigationspfad in Antwort auf das Erfassen der zumindest einen Brandkenngröße anzupassen.

4. Brandschutzsystem (100) nach Anspruch 3, wobei der Brandschutzroboter (1) weiterhin eine Umgebungssensoreinheit (14) umfasst, die konfiguriert ist, zumindest einen Umgebungsparameter entlang des Navigationspfades zu bestimmen; wobei
die Steuereinheit (10) konfiguriert ist, den Navigationspfad in Antwort auf das Erfassen der zumindest einen Brandkenngröße auf Basis des zumindest einen Umgebungsparameters anzupassen.

5. Brandschutzsystem (100) nach Anspruch 4, wobei der Brandschutzroboter (1) weiterhin zumindest eine Kamera (15) umfasst, die konfiguriert ist, in Antwort auf das Erfassen der zumindest einen Brandkenngröße zumindest eine Aufnahme des Standorts des Brandschutzereignisses zu generieren.

6. Brandschutzsystem (100) nach zumindest einem der vorherigen Ansprüche, wobei
die Steuereinheit (10) ferner konfiguriert ist, ein externes Navigationssignal zu empfangen und den Navigationspfad basierend auf dem externen Navigationssignal anzupassen.

7. Brandschutzsystem (100) nach zumindest einem der vorherigen Ansprüche, wobei
die Kommunikationseinheit (12) ferner konfiguriert ist, in Antwort auf das Erfassen der zumindest einen Brandkenngröße ein Alarmsignal an eine Empfangseinheit einer externen Brandschutzstelle zu übermitteln, insbesondere wobei das Alarmsignal die Zielortindikation umfasst.

8. Brandschutzsystem (100) nach zumindest einem der vorherigen Ansprüche, wobei
der Brandschutzroboter (1) weiterhin eine Brandbekämpfungseinheit (16) umfasst.

9. Brandschutzsystem (100) nach einem der vorherigen Ansprüche, weiterhin umfassend
eine Zentralvorrichtung (4) umfassend eine Zentralkommunikationseinheit (40), die konfiguriert ist, das Aktivierungssignal von dem zumindest einen Brandschutzroboter (1) zu empfangen und, in Antwort auf das Empfangen, an die zumindest eine Brandbekämpfungsvorrichtung (2, 3) zu übermitteln, wobei die Zentralvorrichtung (4) insbesondere eine Anzeigeeinheit (41) und eine Nutzerschnittstelle (42, 43) umfasst, wobei
die Anzeigeeinheit (41) dazu konfiguriert ist, auf Basis von Navigationsdaten, welche ein Navigationsraster mit einer Mehrzahl von Rasterkoordinaten umfassen, eine erste grafische Repräsentation (50) des Navigationsrasters zu erzeugen, wobei das Navigationsraster den Brandschutzbereich definiert, und ferner eine zweite grafische Repräsentation eines Standorts (71, 71') des zumindest einen Brandschutzroboters (1) und/oder eines Standorts (72, 72', 72") der zumindest einen Brandbekämpfungsvorrichtung (2, 3) zu erzeugen, und die erste (50) und die zweite grafische Repräsentation einem Nutzer gemeinsam anzuzeigen; und wobei
die Nutzerschnittstelle (42, 43) konfiguriert ist, Eingaben von dem Nutzer zu empfangen und basierend auf den Eingaben ein Nutzerkontrollsignal zu erzeugen.

10. Brandschutzsystem (100) nach Anspruch 9, wobei
das Nutzerkontrollsignal ein externes Navigationssignal für den zumindest einen Brandschutzroboter (1) umfasst; und
die Zentralkommunikationseinheit (4) konfiguriert ist, das externe Navigationssignal an den zumindest einen Brandschutzroboter (1) zu übermitteln.

11. Brandschutzsystem (100) nach zumindest einem der vorherigen Ansprüche ferner umfassend:
zumindest eine Brandbekämpfungsvorrichtung (2, 3), die als ortsfeste Brandbekämpfungsvorrichtung (2) ausgeführt ist.

12. Brandschutzsystem (100) nach zumindest einem der vorherigen Ansprüche, ferner umfassend;
zumindest eine Brandbekämpfungsvorrichtung (2, 3), die als mobile Brandbekämpfungsvorrichtung (3) umfassend zumindest eine Antriebseinheit (31) ausgeführt ist.

13. Brandschutzsystem (100) nach Anspruch 12, wobei die zumindest eine Antriebseinheit (31) konfiguriert ist, die zumindest eine Brandbekämpfungsvorrichtung basierend auf der Zielortindikation selbsttätig zu dem Zielort (70) des Brandereignisses zu navigieren und bei Erreichen des Zielorts einen Löschfluidauslass (32) der Brandbekämpfungsvorrichtung basierend auf der Zielortindikation (3) zu dem Zielort (70) des Brandereignisses auszurichten.

14. Verfahren zum Betrieb eines Brandschutzsystems (100), umfassend die folgenden Schritte:
(a) Bewegen zumindest eines Brandschutzroboters (1) entlang eines vorgegebenen Navigationspfades,
(b) Erfassen, durch den Brandschutzroboter, von zumindest einer Brandkenngröße entlang des vorgegebenen Navigationspfades und Ermitteln eines Zielorts eines Brandereignisses basierend auf der Brandkenngröße und des Navigationspfades; wobei das Verfahren **gekennzeichnet ist, durch** den Schritt:
(c) Übermitteln, in Antwort auf das Erfassen der zumindest einen Brandkenngröße, eines Aktivierungssignals und einer Zielortindikation, die den ermittelten Zielort angibt, an zumindest eine Brandbekämpfungsvorrichtung (2, 3), wobei die Brandbekämpfungsvorrichtung (2, 3) getrennt von dem Brandschutzroboter (1) ausgeführt und eingerichtet ist, in Antwort auf das Aktivierungssignal eine Löschaktion zur Bekämpfung eines Brandes umfassend ein Ausrichten der Brandbekämpfungsvorrichtung basierend auf der Zielortindikation dergestalt, dass ein Löschfluidauslass der Brandbekämpfungsvorrichtung das Löschfluid in Richtung des Brandereignisses ausgeben kann, durchzuführen.

15. Verfahren nach nach Anspruch 14, das Verfahren außerdem umfasst
(e) selbsttätiges Navigieren der zumindest einen Brandbekämpfungsvorrichtung (3) basierend auf der Zielortindikation zu dem Zielort (70) des Brandereignisses.

## Claims

1. Fire-protection system (100), comprising:
at least one fire-protection robot (1), and
at least one fire-fighting device (2, 3), which is designed separately from the fire-protection robot (1); wherein the fire-protection robot (1) comprises:
a control unit (10) which is designed to move the fire-protection robot along a predetermined navigation path;
a fire sensor unit (11) which is designed to detect at least one fire parameter along the predetermined navigation path; and
a processor unit which is designed to determine a destination of a fire event on the basis of the at least one fire parameter and the navigation path,
**characterized in that**
the fire-protection robot (1) further comprises a communication unit (12) adapted to transmit, in response to the detection of the at least one fire parameter, an activation signal and a target location indication indicating the determined target location to the at least one fire-fighting device (2, 3) separate from the fire-protection robot, wherein the fire-fighting device (2, 3) comprises a receiving unit (20, 30) for receiving the activation signal and the target indication from the fire-protection robot (1), and
wherein the fire-fighting device (2, 3) is adapted to perform an extinguishing action for fighting a fire in response to the activation signal, wherein the fire-fighting device (2, 3) comprises at least one alignment unit (21), which is configured to align an extinguishing fluid outlet (22) of the fire-fighting device (2,3) based on the target location indication in the direction of the target location, and
the extinguishing action comprises directing the fire-fighting device such that an extinguishing fluid outlet of the fire-fighting device can discharge the extinguishing fluid in the direction of the fire event.

2. Fire-protection system (100) according to claim 1, wherein
the control unit (10) determines the predetermined navigation path on the basis of navigation data comprising a navigation grid with a plurality of grid coordinates, the navigation grid defining a fire-protection area.

3. Fire-protection system (100) according to at least one of claims 1 or 2, wherein
the control unit (10) is further configured to adapt the predetermined navigation path in response to the detection of the at least one fire parameter.

4. Fire-protection system (100) according to claim 3, wherein the fire-protection robot (1) further comprises an environmental sensor unit (14) configured to determine at least one environmental parameter along the navigation path; wherein
the control unit (10) is configured to adapt the navigation path in response to the detection of the at least one fire parameter on the basis of the at least one environmental parameter.

5. Fire-protection system (100) according to claim 4, wherein the fire-protection robot (1) further comprises at least one camera (15) configured to generate at least one image of the location of the fire-protection event in response to the detection of the at least one fire parameter.

6. Fire-protection system (100) according to at least one of the preceding claims, wherein
the control unit (10) is further configured to receive an external navigation signal and to adjust the navigation path based on the external navigation signal.

7. Fire-protection system (100) according to at least one of the preceding claims, wherein
the communication unit (12) is further configured to transmit an alarm signal to a receiving unit of an external fire-protection station in response to the detection of the at least one fire parameter, in particular wherein the alarm signal comprises the target location indication.

8. Fire-protection system (100) according to at least one of the preceding claims, wherein the
fire-protection robot (1) further comprises a fire-fighting unit (16).

9. Fire-protection system (100) according to any of the preceding claims, further comprising
a central device (4) comprising a central communication unit (40) configured to receive the activation signal from the at least one fire-protection robot (1) and, in response to said receiving, to transmit it to the at least one fire-fighting device (2, 3), said central device (4) comprising in particular a display unit (41) and a user interface (42, 43), wherein
the display unit (41) is configured to generate a first graphical representation (50) of the navigation grid on the basis of navigation data comprising a navigation grid with a plurality of grid coordinates, wherein the navigation grid defines the fire-protection area, and further generating a second graphical representation of a location (71, 71') of the at least one fire-protection robot (1) and/or a location (72, 72', 72") of the at least one fire-fighting device (2, 3), and displaying the first (50) and the second graphical representation together to a user; and wherein
the user interface (42, 43) is configured to receive inputs from the user and to generate a user control signal based on the inputs.

10. Fire-protection system (100) according to claim 9, wherein
the user control signal comprises an external navigation signal for the at least one fire-protection robot (1); and
the central communication unit (4) is configured to transmit the external navigation signal to the at least one fire-protection robot (1).

11. A fire-protection system (100) according to at least one of the preceding claims, further comprising:
at least one fire-fighting device (2, 3), which is designed as a stationary fire-fighting device (2).

12. A fire-protection system (100) according to at least one of the preceding claims, further comprising;
at least one fire-fighting device (2, 3), which is designed as a mobile fire-fighting device (3) comprising at least one drive unit (31).

13. Fire-protection system (100) according to claim 12, wherein
the at least one drive unit (31) is configured to automatically navigate the at least one fire-fighting device to the target location (70) of the fire incident based on the target location indication and, upon reaching the target location, to direct an extinguishing fluid outlet (32) of the fire-fighting device (3) to the target location (70) of the fire incident based on the target location indication.

14. A method of operating a fire-protection system (100), comprising the following steps:
(a) Moving at least one fire-protection robot (1) along a predetermined navigation path,
(b) detecting through the fire-protection robot at least one fire parameter along the predetermined navigation path and determining a target location of a fire event based on the fire parameter and the navigation path; the method being **characterized by** the step of:
(c) transmitting, in response to the detection of the at least one fire parameter, an activation signal and a target location indication, which indicates the determined target location, to at least one fire-fighting device (2, 3), the fire-fighting device (2, 3) being designed and set up separately from the fire-protection robot (1), performing, in response to the activation signal, an extinguishing action for fighting a fire comprising directing the fire-fighting device in such a way that an extinguishing fluid outlet of the fire-fighting device can discharge the extinguishing fluid in the direction of the fire event.

15. A method according to claim 14, wherein the method further comprises
(e) automatically navigating the at least one firefighting device (3) to the target location (70) of the fire event based on the target location indication.

## Revendications

1. Système de protection anti-incendie (100), comprenant :
au moins un robot de protection anti-incendie (1), et
au moins un dispositif de lutte contre l'incendie (2, 3), lequel est réalisé séparément du robot de protection anti-incendie (1) ; dans lequel le robot de protection anti-incendie (1) comprend :
une unité de commande (10), qui est réalisée pour déplacer le robot de protection anti-incendie le long d'un trajet de navigation prédéfini ;
une unité de détection d'incendie (11), qui est réalisée pour détecter au moins une grandeur caractéristique d'incendie le long du trajet de navigation prédéfini ; et
une unité de processeur, qui est réalisée pour déterminer un emplacement cible d'un événement d'incendie sur la base de l'au moins une grandeur caractéristique d'incendie et du trajet de navigation,
**caractérisé en ce que**
le robot de protection anti-incendie (1) comprend en outre une unité de communication (12) qui est réalisée pour transmettre, en réponse à la détection de l'au moins une grandeur caractéristique d'incendie, à l'au moins un dispositif de lutte contre l'incendie (2, 3) séparé du robot de protection anti-incendie un signal d'activation et une indication d'emplacement cible, qui indique l'emplacement cible déterminé, dans lequel le dispositif de lutte contre l'incendie (2, 3) comprend une unité de réception (20, 30) destinée à recevoir le signal d'activation et l'indication d'emplacement cible du robot de protection anti-incendie (1), et
dans lequel le dispositif de lutte contre l'incendie (2, 3) est mis au point pour mettre en oeuvre, en réponse au signal d'activation, une action d'extinction pour lutter contre un incendie, dans lequel le dispositif de lutte contre l'incendie (2, 3) comprend au moins une unité d'orientation (21), laquelle est configurée pour orienter en direction de l'emplacement cible une sortie de fluide d'extinction (22) du dispositif de lutte contre l'incendie sur la base de l'indication d'emplacement cible, et
l'action d'extinction comprend une orientation du dispositif de lutte contre l'incendie de telle manière qu'une sortie de fluide d'extinction du dispositif de lutte contre l'incendie peut envoyer le fluide d'extinction en direction de l'événement d'incendie.

2. Système de protection anti-incendie (100) selon la revendication 1, dans lequel
l'unité de commande (10) détermine le trajet de navigation prédéfini sur la base de données de navigation, lesquelles comprennent une trame de navigation avec une pluralité de coordonnées de trame, dans lequel la trame de navigation définit une zone de protection anti-incendie.

3. Système de protection anti-incendie (100) selon au moins l'une quelconque des revendications 1 ou 2, dans lequel
l'unité de commande (10) est configurée en outre pour adapter le trajet de navigation prédéfini en réponse à la détection de l'au moins une grandeur caractéristique d'incendie.

4. Système de protection anti-incendie (100) selon la revendication 3, dans lequel le robot de protection anti-incendie (1) comprend par ailleurs une unité de détection d'environnement (14), qui est configurée pour définir au moins un paramètre d'environnement le long du trajet de navigation ; dans lequel
l'unité de commande (10) est configurée pour adapter le trajet de navigation en réponse à la détection de l'au moins une grandeur caractéristique d'incendie sur la base de l'au moins un paramètre d'environnement.

5. Système de protection anti-incendie (100) selon la revendication 4, dans lequel le robot de protection anti-incendie (1) comprend par ailleurs au moins une caméra (15), qui est configurée pour générer, en réponse à la détection de l'au moins une grandeur caractéristique d'incendie, au moins un enregistrement du site de l'événement de protection anti-incendie.

6. Système de protection anti-incendie (100) selon au moins l'une quelconque des revendications précédentes, dans lequel
l'unité de commande (10) est configurée en outre pour recevoir un signal de navigation externe et pour adapter le trajet de navigation sur la base du signal de navigation externe.

7. Système de protection anti-incendie (100) selon au moins l'une quelconque des revendications précédentes, dans lequel
l'unité de communication (12) est configurée en outre pour transférer, en réponse à la détection de l'au moins une grandeur caractéristique d'incendie, un signal d'alarme à une unité de réception d'un point de protection anti-incendie externe, en particulier dans lequel le signal d'alarme comprend l'indication d'emplacement cible.

8. Système de protection anti-incendie (100) selon au moins l'une quelconque des revendications précédentes, dans lequel le robot de protection anti-incendie (1) comprend par ailleurs une unité de lutte contre l'incendie (16).

9. Système de protection anti-incendie (100) selon l'une quelconque des revendications précédentes, comprenant par ailleurs
un dispositif central (4) comprenant une unité de communication centrale (40), qui est configurée pour recevoir le signal d'activation de l'au moins un robot de protection anti-incendie (1) et pour le transmettre, en réponse à la réception, à l'au moins un dispositif de lutte contre l'incendie (2, 3), dans lequel le dispositif central (4) comprend en particulier une unité d'affichage (41) et une interface utilisateur (42, 43), dans lequel
l'unité d'affichage (41) est configurée pour générer, sur la base de données de navigation, lesquelles comprennent une trame de navigation avec une multitude de coordonnées de trame, une première représentation graphique (50) de la trame de navigation, dans lequel la trame de navigation définit la zone de protection anti-incendie, et pour générer en outre une deuxième représentation graphique d'un site (71, 71') de l'au moins un robot de protection anti-incendie (1) et/ou d'un site (72, 72', 72'') de l'au moins un dispositif de lutte contre l'incendie (2, 3) et pour afficher conjointement à un utilisateur la première (50) et la deuxième représentation graphique ; et dans lequel
l'interface utilisateur (42, 43) est configurée pour recevoir des entrées de l'utilisateur et pour générer un signal de contrôle d'utilisateur sur la base des entrées.

10. Système de protection anti-incendie (100) selon la revendication 9, dans lequel
le signal de contrôle d'utilisateur comprend un signal de navigation externe pour l'au moins un robot de protection anti-incendie (1) ; et
l'unité de communication centrale (4) est configurée pour transmettre le signal de navigation externe à l'au moins un robot de protection anti-incendie (1) .

11. Système de protection anti-incendie (100) selon au moins l'une quelconque des revendications précédentes, comprenant en outre :
au moins un dispositif de lutte contre l'incendie (2, 3), qui est réalisé en tant que dispositif de lutte contre l'incendie (2) stationnaire.

12. Système de protection anti-incendie (100) selon au moins l'une quelconque des revendications précédentes, comprenant en outre :
au moins un dispositif de lutte contre l'incendie (2, 3), qui est réalisé en tant que dispositif de lutte contre l'incendie (3) mobile comprenant au moins une unité d'entraînement (31).

13. Système de protection anti-incendie (100) selon la revendication 12, dans lequel
l'au moins une unité d'entraînement (31) est configurée pour faire naviguer l'au moins un dispositif de lutte contre l'incendie sur la base de l'indication d'emplacement cible de manière autonome vers l'emplacement cible (70) de l'événement d'incendie et pour orienter, lorsque l'emplacement cible est atteint, une sortie de fluide d'extinction (32) du dispositif de lutte contre l'incendie sur la base de l'indication d'emplacement cible (3) vers l'emplacement cible (70) de l'événement d'incendie.

14. Procédé pour faire fonctionner le système de protection anti-incendie (100), comprenant les étapes suivantes :
(a) de déplacement d'au moins un robot de protection anti-incendie (1) le long d'un trajet de navigation prédéfini,
(b) de détection, par le robot de protection anti-incendie, d'au moins une grandeur caractéristique d'incendie le long du trajet de navigation prédéfini et de détermination d'un emplacement cible d'un événement d'incendie sur la base de la grandeur caractéristique d'incendie et du trajet de navigation ; dans lequel le procédé est **caractérisé par** l'étape :
(c) de transmission, en réponse à la détection de l'au moins une grandeur caractéristique d'incendie, d'un signal d'activation et d'une indication d'emplacement cible, qui indique l'emplacement cible déterminé, à au moins un dispositif de lutte contre l'incendie (2, 3), dans lequel le dispositif de lutte contre l'incendie (2, 3) est réalisé séparément du robot de protection anti-incendie (1) et est mis au point pour mettre en oeuvre, en réponse au signal d'activation, une action d'extinction destinée à lutter contre un incendie comprenant une orientation du dispositif de lutte contre l'incendie sur la base de l'indication d'emplacement cible de telle manière qu'une sortie de fluide d'extinction du dispositif de lutte contre l'incendie peut envoyer le fluide d'extinction en direction de l'événement d'incendie.

15. Procédé selon la revendication 14,
dans lequel le procédé comprend par ailleurs
(e) la navigation autonome de l'au moins un dispositif de lutte contre l'incendie (3) sur la base de l'indication d'emplacement cible vers l'emplacement cible (70) de l'événement d'incendie.
